# EUROPÄISCHE PATENTSCHRIFT

(11) **EP 0 990 880 B1**
(45) Veröffentlichungstag und Bekanntmachung des Hinweises auf die Patenterteilung: **07.12.2005**
(21) Anmeldenummer: 99203008.0
(22) Anmeldetag: 14.09.1999
(51) Int. Cl.: G01G 21/24

(54) **Kraftmessvorrichtung, insbesondere Wägezelle**
Force measurement device, in particular a load cell
Dispositif de mesure de force, en particulier un capteur de pesage

(30) Priorität: 30.09.1998 DE 19845023
(43) Veröffentlichungstag der Anmeldung: 05.04.2000
(60) Teilanmeldung: 05102785.2
(73) Patentinhaber: Mettler-Toledo GmbH, 8606 Greifensee (CH)
(72) Erfinder: Burkhard, Hans-Rudolf, 8492 Wila (CH); Hess, Luzi, 8051 Zürich (CH); Köppel, Thomas, Dr., 8618 Oetwil am See (CH); Emery, Jean-Christophe, 8603 Schwerzenbach (CH); Kaderli, Erwin, 8604 Volketswil (CH)

(56) Entgegenhaltungen:
- DE-A- 4 305 425
- DE-U- 29 809 833

## Beschreibung

Die Erfindung bezieht sich auf eine Kraftmeßvorrichtung, insbesondere Wägezelle, mit einem zur Aufnahme der zu messenden Kraft dienenden Lastaufnehmer, der von zwei in zwei zueinander parallelen Ebenen sich erstreckenden, in der Richtung dieser Ebenen steifen und quer zur Richtung dieser Ebenen biegeelastischen Parallelogrammlenkern, deren jeder an einem Ende mit dem Lastaufnehmer und an einem in der Längsrichtung des Lenkers dazu entgegengesetzten anderen Ende mit einem feststehenden Teil der Kraftmeßvorrichtung verbunden ist, an dem feststehenden Teil parallel auslenkbar geführt ist, und einer zur Übertragung mindestens eines Teils der den Lastaufnehmer belastenden, zu messenden Kraft auf einen Meßwandler zur Lieferung eines der zu messenden Kraft entsprechenden Signals dienenden Vorrichtung, die mindestens einen um eine bezüglich eines sich zwischen den beiden Lenkern in einer zu deren Ebene parallelen Ebene erstreckenden Tragbereichs des feststehenden Teils feststehende Schwenkachse verschwenkbaren, der Kraftübertragung dienenden Hebel aufweist, der an den Lastaufnehmer kräftemäßig angekoppelt ist.

Es ist bekannt, Wägezellen dieser Art aus zahlreichen Einzelteilen zusammenzusetzen, welche mit dem feststehenden Teil starr verbunden oder an dem feststehenden Teil beweglich angelenkt werden müssen. Insbesondere befinden sich an dem feststehenden Teil die Anlenkstellen der Lenker und des Hebels. Da Lageabweichungen dieser Anlenkstellen unter dem Einfluß der zu messenden Kraft die Meßgenauigkeit beeinträchtigen, soll das feststehende Teil besonders stabil sein.

Auch ist es bekannt (DE 41 19 734 A1), das feststehende Teil, die Lenker, den Lastaufnehmer und den Hebel in der Form von zusammenhängenden Materialbereichen eines einstückigen Materialblocks auszubilden, wodurch insbesondere das Zusammenbauen entsprechender Einzelteile entfällt. Das Heraustrennen der einzelnen Materialbereiche aus dem Materialblock, das beispielsweise durch Funkenerodieren erfolgen kann, stellt jedoch insbesondere dann einen verhältnismäßig aufwendigen Arbeitsvorgang dar, wenn wegen hoher Anforderungen an die Meßgenauigkeit die dem beweglichen Zusammenhang dieser Materialbereiche dienenden Materialdünnstellen des Materialblocks einer entsprechend feinen Bearbeitung bedürfen.

In DE 43 05 425 A1 wird eine Wägezelle beschrieben, die eine einstückige Kraftübertragungsvorrichtung aufweist. Diese Kraftübertragungsvorrichtung ist innerhalb einer einstückigen Parallelogrammführung angeordnet und mit dieser fest verbunden. Die Parallelogrammführung ist gegenüber der Kraftübertragungsvorrichtung wesentlich breiter ausgestaltet.

Der Erfindung liegt die Aufgabe zugrunde, eine Kraftmeßvorrichtung der eingangs genannten Art zu schaffen, die bei zufriedenstellender Meßgenauigkeit aus nur wenigen und einfachen Bauteilen zusammengesetzt ist.

Erfindungsgemäß wird diese Aufgabe dadurch gelöst, daß das feststehende Teil in der Form einer den Tragbereich bildenden Grundplatte ausgebildet ist, die an ihren in der Längsrichtung der Lenker sich erstreckenden Endbereichen je eine sich quer zur Grundplatte erstreckende Seitenplatte aufweist, an der die Lenker auf der Seite ihrer dem Lastaufnehmer abgewandten Enden abgestützt sind.

Die durch die Grundplatte und die sich quer dazu erstreckenden Seitenplatten bedingte Form führt zu einer besonders guten Stabilität des feststehenden Teils.

Gleichzeitig ermöglicht diese Form des feststehenden Teils auf einfache Weise die Abstützung der Enden der Lenker. Letztere erstrecken sich von ihren an den Seitenplatten befestigten Enden beidseits der Grundplatte und parallel dazu bis zu ihren mit dem Lastaufnehmer verbundenen Enden. Infolge ihrer Biegeelastizität bilden sie eine Parallelogrammführung für den Lastaufnehmer, deren Parallelogrammebene sich senkrecht zu den Ebenen der Lenker und der Grundplatte sowie in der vom einen Lenkerende zum anderen Lenkerende gerichteten Längsrichtung der Lenker erstreckt. Wegen der hohen Formstabilität des feststehenden Teils bleiben bei Belastung die Parallelogrammeckpunkte der Parallelogrammführung stabil erhalten, was für die Meßgenauigkeit von Vorteil ist. Gleichzeitig ist die Form des feststehenden Teils einfach, so daß es mit verhältnismäßig geringem Aufwand hergestellt werden kann.

In einer vorteilhaften Ausführungsform dient es insbesondere der Einfachheit, daß die Grundplatte und die daran vorgesehenen Seitenplatten durch einen Abschnitt eines einstückigen H-Profils gebildet sind, in dem die Grundplatte den Querbalken und die Seitenplatten die senkrechten Balken der H-Form bilden. Ein derartiges H-Profil kann leicht hergestellt werden. Beispielsweise kann es als Strangpreßprofil oder als Druckgußprofil zur Verfügung gestellt werden.

Ferner dient es der Einfachheit des Aufbaus, daß in einer zweckmäßigen Ausführungsform die Seitenplatten zu den Ebenen der Lenker parallele Randflächenbereiche aufweisen, auf denen die dem Lastaufnehmer abgewandten Enden der Lenker befestigt sind. Dies ist vor allem auch dann von Vorteil, wenn, wie zumeist, die Biegeelastizität der Lenker durch ihre Enden bildende Biegelager verwirklicht wird, die zwischen zwei als Befestigungsflächen dienenden Enden eine Biegelinie aufweisen. In diesem Fall weist jeder Lenker an seinem mit dem feststehenden Teil verbundenen Ende je zwei Biegelager auf, deren Befestigungsflächen sich parallel zur Ebene des Lenkers erstrecken, wobei die beiden zum feststehenden Teil weisenden Befestigungsflächen auf den dazu parallelen Randflächenbereichen der Seitenplatten aufliegen und dort befestigt sind, während die jenseits der Biegelinien gelegenen anderen Befestigungsflächen der Biegelager an einem starren plattenförmigen Bereich des Lenkers befestigt sind.

Im Rahmen der Erfindung ist auch vorgesehen, daß mindestens eine der Seitenplatten einen sich zumindest in ihrem an die Befestigungsstelle eines der Lenker angrenzenden Bereich erstreckenden Schlitz aufweist, dessen Weite quer zur Ebene der Lenker verstellbar ist. Durch die Verstellung der Schlitzweite, die beispielsweise durch eine an dem Schlitz angreifende Stellschraube erfolgen kann, kann der Abstand des durch die betreffende Befestigungsstelle bestimmten Parallelogrammpunktes von dem in bezug auf die Ebene der Lenker quer gegenüberliegenden Parallelogrammpunkt verändert werden. Auf diese Weise kann ein Abgleich gegen sog. Eckenlastfehler erfolgen, die insbesondere dann auftreten, wenn die zu messende Kraft in den Lastaufnehmer bezüglich seiner sich längs der Auslenkrichtung erstreckenden Symmetrieachse unsymmetrisch eingeleitet wird.

Weiter besteht eine zweckmäßige Ausgestaltung der Erfindung darin, daß der Hebel durch mindestens ein zwei Befestigungsenden und eine dazwischen angeordnete Biegelinie aufweisendes Biegelager, dessen eines Befestigungsende an dem feststehenden Teil und dessen anderes Befestigungsende an dem Hebel festgelegt ist und dessen Biegelinie die Schwenkachse bildet, an dem feststehenden Teil angelenkt ist. Hierbei wird der Hebel mittels des Biegelagers unmittelbar an dem feststehenden Teil angelenkt, an welchem infolge seiner Formgebung ohne Schwierigkeit eine geeignete Befestigungsfläche zur Verfügung gestellt werden kann.

Besonders vorteilhaft ist diese Anlenkung des Hebels in einer Ausführungsform der Erfindung derart gestaltet, daß die beiden Seitenplatten des feststehenden Teils je einen in einer quer zur Längsrichtung der Lenker gerichteten Ebene sich erstreckenden stirnseitigen Befestigungsbereich aufweisen, an deren jedem je ein Befestigungsende eines der Biegelager festgelegt ist und der Hebel einen sich zwischen den zu den an den Seitenplatten befestigten Befestigungsenden entgegengesetzten Befestigungsenden der Biegelager erstreckenden und daran befestigten Anlenkbereich aufweist. Hierbei erstreckt sich der Anlenkbereich des Hebels über die gesamte von Seitenplatte zu Seitenplatte gemessene Breitenabmessung des feststehenden Teils und bedingt dadurch eine besonders robuste Bauform, die sich die Grundform des feststehenden Teils vorteilhaft zunutze macht.

Diese Ausführungsform kann derart weiter ausgestaltet sein, daß der Anlenkbereich in bezug auf eine längs der Lenker von deren am Lastaufnehmer festgelegten Ende zu deren am feststehenden Teil festgelegten Ende hin gerichtete Blickrichtung vor dem Lastaufnehmer angeordnet ist. Durch diese Anordnung steht in der Längsrichtung der Lenker für die nutzbare Länge des Hebels am meisten Platz zur Verfügung. Auch sind dabei die Befestigungsenden der Biegelager gut zugänglich und können einfach montiert werden.

Dazu alternativ kann vorgesehen sein, daß der Anlenkbereich in bezug auf eine längs der Lenker von deren am Lastaufnehmer festgelegten Ende zu deren am feststehenden Teil festgelegten Ende hin gerichtete Blickrichtung hinter dem Lastaufnehmer angeordnet ist. Hierbei steht für den Lastaufnehmer der gesamte Platz vor dem Anlenkbereich des Hebels zur Verfügung, was eine besonders stabile Ausbildung des Lastaufnehmers ermöglicht.

Gemäß einem anderen Gedanken der Erfindung ist vorgesehen, daß die zur Übertragung der zu messenden Kraft dienende Vorrichtung einen einstückigen Materialblock aufweist, in dem von den Materialblock quer zu der durch die Längsrichtung der Lenker und die Auslenkrichtung des Lastaufnehmers bestimmten Parallelogrammebene durchsetzenden Ausnehmungen ein an der Grundplatte des feststehenden Teils festgelegter Materialbereich und ein damit über einen als Biegestelle geformten, die Schwenkachse bildenden Materialbereich zusammenhängender, den Hebel bildender Materialbereich begrenzt sind.

Da bei dieser Ausführungsform der Hebel, die Biegestelle und der an der Grundplatte festgelegte Materialbereich einstückig zusammenhängen, bedarf es nicht der Montage eines getrennten, zur Abstützung des Hebels dienenden Biegelagers. Die mit dem Hebel einstückig zusammenhängende Biegestelle bietet den Vorteil, daß sie keine Verschraubungen erfordert. Der Materialblock und die darin begrenzten Materialbereiche können sehr klein und kompakt gestaltet werden. Auch lassen sich die für die Meßgenauigkeit kritischen Bereiche, insbesondere die Biegestelle des Hebels, mit kleinen Toleranzen ausführen.

Eine zweckmäßige weitere Ausgestaltung dieser Ausführungsform besteht darin, daß in dem Materialblock von einer ihn quer zur Parallelogrammebene durchsetzenden Ausnehmung ein an seinem einen Ende mit dem kräftemäßig an den Lastaufnehmer angekoppelten Arm des Hebels zusammenhängender und an seinem dazu entgegengesetzten Ende mit dem Lastaufnehmer verbundener, als Koppelglied dienender Materialbereich begrenzt ist. Hierbei hängt auch das zum Anschließen des Hebels an den Lastaufnehmer dienende Koppelglied einstückig mit dem Hebel zusammen, was der Einfachheit des Aufbaus dient. An seinem zum Lastaufnehmer weisenden Ende wird das Koppelglied mit dem Lastaufnehmer verschraubt. Das Koppelglied ist in der Richtung der von ihm zu übertragenden Kraft steif und in der dazu senkrechten Richtung in der Parallelogrammebene biegeelastisch, um den Auslenkbewegungen des Lastaufnehmers und des Hebels nachgeben zu können. Die Herstellung dieser Biegeelastizität durch je eine im Bereich des dem Hebel und dem Lastaufnehmer zugewandten Endes des Koppelgliedes angeordnete Dünnstelle läßt sich durch geeignete Gestaltung der Ausnehmung des Materialblocks mit geringer Toleranz ausführen, was für die Meßgenauigkeit von Vorteil ist.

Bei Bedarf kann die zur Übertragung der zu messenden Kraft dienende Vorrichtung auch derart ausgeführt sein, daß in dem Materialblock von einer ihn quer zur Parallelogrammebene durchsetzenden Ausnehmung mindestens ein einen dem Hebel nachgeschalteten weiteren Hebel bildender Materialbereich sowie ein an seinem einen Ende mit einem Arm des weiteren Hebels und an seinem dazu entgegengesetzten anderen Ende mit dem dem Lastaufnehmer abgewandten Arm des vorgeschalteten Hebels zusammenhängender, als weiteres Koppelglied dienender Materialbereich begrenzt ist. Der weitere Hebel ermöglicht eine weitere Kraftübersetzung, sofern dies aus Platz- oder Festigkeitsgründen mit einem einzigen Hebel nicht erreichbar ist. Analog könnte im Bedarfsfall auch dem weiteren Hebel noch einer oder mehrere zusätzliche Hebel nachgeschaltet werden.

Bei allen diesen einstückigen Ausführungsformen der zur Übertragung der Kraft dienenden Vorrichtung ist es besonders zweckmäßig, daß zumindest ein Teil der Ausnehmungen nur durch eine den Materialblock durchtrennende dünne Schnittlinie gebildet ist. Da für die beweglichen Bereiche des Materialblocks nur sehr kleine Auslenkwege erforderlich sind, kann die Breite der dünnen Schnittlinien sehr klein sein. Solche dünnen Schnittlinien lassen sich vor allem durch Funkenerodieren herstellen. Durch diese Minimierung der Größe der Ausnehmungen wird für die davon begrenzten Materialbereiche ein Maximum an Platz zur Verfügung gestellt, wodurch die Festigkeit der von diesen Materialbereichen gebildeten kraftübertragenden Teile gegen Durchbiegungen erhöht und damit die Meßgenauigkeit gefördert wird.

Die Verbindung zwischen dem feststehenden Teil der Kraftmeßvorrichtung und der zur Übertragung der zu messenden Kraft dienenden Vorrichtung erfolgt bei diesen Ausführungsformen zweckmäßig dadurch, daß der an der Grundplatte festgelegte Materialbereich eine mit einem Oberflächenbereich der Grundplatte formschlüssig in Eingriff stehende Anlagefläche aufweist und durch mindestens einen sich parallel zur Parallelogrammebene erstreckenden Schraubbolzen an der Grundplatte festgespannt ist. Hierfür bedarf es nur der Ausbildung einer den jeweiligen Schraubbolzen aufnehmenden Bohrung in dem an der Grundplatte festgelegten Materialbereich. Ein zur Festlegung des Schraubbolzens dienendes Gewinde kann beispielsweise in der Grundplatte ausgebildet sein, wobei sich dann der Schraubbolzen durch die Bohrung des festgelegten Materialbereichs hindurch erstreckt und mit seinem Schraubbolzenkopf an einer geeigneten Gegenfläche des festgelegten Materialbereichs anliegt.

Alternativ kann vorgesehen sein, daß der an der Grundplatte festgelegte Materialbereich eine mit einem Oberflächenbereich der Grundplatte formschlüssig in Eingriff stehende Anlagefläche aufweist und durch mindestens einen sich quer zur Parallelogrammebene erstreckenden Schraubbolzen an mindestens einem mit der Grundplatte verbundenen sowie dazu senkrecht abstehenden Befestigungsteil befestigt ist. Im Unterschied zu der vorstehend genannten Ausführungsform erstreckt sich dabei der mindestens eine Schraubbolzen nicht parallel zur Parallelogrammebene, sondern senkrecht dazu durch eine zur Aufnahme des jeweiligen Schraubbolzens dienende Bohrung des festgelegten Materialbereichs.

Eine weitere zweckmäßige Alternative besteht darin, daß der an der Grundplatte festgelegte Materialbereich eine mit einem zu einem der Lenker weisenden Oberflächenbereich der Grundplatte sowie einem daran angrenzenden, sich quer zur Ebene der Lenker erstreckenden stirnseitigen Oberflächenbereich der Grundplatte formschlüssig in Eingriff stehende Anlagefläche aufweist und durch mindestens einen den stirnseitigen Oberflächenbereich durchsetzenden Schraubbolzen an der Grundplatte festgespannt ist. Dabei weist der betreffende Oberflächenbereich der Grundplatte zweckmäßigerweise zu dem ihr entgegengesetzt zur Richtung der in den Lastaufnehmer eingeleiteten, zu messenden Kraft gegenüberliegenden Lenker, wodurch die zu messende Kraft im Sinne eines gegenseitigen Andrucks zwischen dem festgelegten Materialbereich und der Grundplatte wirkt. Der zur stirnseitigen Befestigung dienende Schraubbolzen erstreckt sich parallel zur Ebene der Grundplatte sowie zur Parallelogrammebene.

Eine sehr vorteilhafte Formgebung der zur Übertragung der zu messenden Kraft dienenden Vorrichtung ergibt sich dadurch, daß der Materialblock in der Parallelogrammebene gesehen L-förmig sowie das den Hebel mit dem Lastaufnehmer verbindende Koppelglied in dem sich parallel zum Lastaufnehmer erstreckenden einen L-Schenkel und der Hebel in dem sich parallel zur Ebene der Grundplatte erstreckenden anderen L-Schenkel ausgebildet ist. Durch diese L-Form läßt sich bei allen Ausführungsformen insbesondere die der Befestigung dienende Anlagefläche leicht verwirklichen. Auch trägt die L-Form dem Umstand Rechnung, daß der Hebel und das Koppelglied längs zueinander senkrechten Richtungen verlaufen und daher durch die Ausbildung des Hebels und des Koppelgliedes in den beiden zueinander senkrechten L-Schenkeln die für den Materialblock erforderliche Materialmenge besonders klein gehalten wird.

Die Erfindung sieht ferner vor, daß der Meßwandler an der Grundplatte festgelegt ist.

Die Form und Stabilität der Grundplatte des feststehenden Teils eignet sich sehr gut dafür, den Meßwandler auf einfache Weise lagegenau und lagebeständig abzustützen. Häufig handelt es sich bei dem Meßwandler um ein elektromagnetisches Kraftkompensationssystem. Dieses weist einen mit einem Magnetjoch versehenen Permanentmagneten auf, der an der Grundplatte befestigt ist. In den Luftspalt des durch den Permanentmagneten und das Magnetjoch gebildeten Magnetkreises taucht eine von einem Kompensationsstrom durchflossene Kraftkompensationsspule ein, welche mit dem Hebel der Kraftübertragungsvorrichtung verbunden ist. Der Meßwandler ist mit einem Positionsgeber versehen, der die Lage der Kompensationsspule in dem Magnetfeld überwacht und ein Positionserfassungssignal erzeugt, durch das der Kompensationsstrom derart geregelt wird, daß die Kompensationsspule bei Kraftbelastung des Lastaufnehmers in ihrer Ausgangslage gehalten wird. Der Kompensationsstrom stellt somit ein Maß für die zu messende Kraft dar.

Auch sieht es die Erfindung gemäß einem weiteren Gesichtspunkt vor, daß ein an einem Oberflächenbereich der Grundplatte festgelegter Träger einen sich quer zur Grundplatte erstreckenden Schaft aufweist, der mit Spiel durch eine in dem dem Oberflächenbereich zugewandten Lenker vorgesehene Öffnung hindurchgeführt ist. Durch diesen Träger, der beispielsweise an seinem der Grundplatte entgegengesetzten Endbereich mit der Grundplatte eines Waagengehäuses verbunden sein kann, wird das tragende Teil mit allen daran festgelegten Teilen stationär abgestützt. Die durch die Einleitung der zu messenden Kraft auftretenden Abstützkräfte und -momente werden dabei von dem Träger sehr günstig aufgenommen und abgeleitet.

Eine stabil und einfach aufzubauende andere Ausführungsform der Kraftmeßvorrichtung zeichnet sich erfindungsgemäß dadurch aus, daß der Lastaufnehmer, die Parallelogrammlenker und das feststehende Teil einstückig zusammenhängend in einem querschnittlich rechteckigen Hohlprofilstück ausgebildet sind, in dem die beiden Seitenplatten durch Bereiche zweier zueinander paralleler Seitenwände des Hohlprofilstücks gebildet sind, zwischen denen sich die Grundplatte zwischen zwei dazu beabstandeten, zur Grundplatte parallelen und die beiden Seitenwände verbindenden Querwänden erstreckt, daß in dem Hohlprofil in der Längsrichtung der Parallelogrammlenker sich erstreckende, die Parallelogrammlenker begrenzende durchgehende Längsschlitze ausgebildet sind, zwischen deren einander quer zur Längsrichtung in den Ebenen der Lenker jeweils paarweise gegenüberliegenden Enden in dem Hohlprofilstück Dünnstellen ausgebildet sind, welche elastische Biegestellen an den Enden der Parallelogrammlenker bilden, und daß in dem Hohlprofilstück sich quer zur Längsrichtung erstreckende Querschlitze ausgebildet sind, die den Lastaufnehmer gegen das feststehende Teil begrenzen.

Diese Ausführungsform ist insbesondere für Lasten im Bereich von mehreren hundert Kilo geeignet. Die Herstellung kann auf einfache Weise dadurch erfolgen, daß ein Hohlprofil mit an die gewünschte Maximallast angepaßter Wandstärke extrudiert und davon die Hohlprofilstücke abgeschnitten werden. Die zur Abgrenzung der Parallelogrammlenker und des Lastaufnehmers erforderlichen Längs- bzw. Querschlitze sowie die zur Bildung der Dünnstellen dienenden Materialausnehmungen des Hohlprofils können sowohl vor als auch nach dem Abschneiden durch einfache Fräs- und/oder Bohrvorgänge ausgebildet werden. Die zur Übertragung der zu messenden Kraft vom Lastaufnehmer zum Meßwandler dienende Vorrichtung braucht dann nur noch in das Hohlprofilstück eingesetzt, auf der Grundplatte befestigt und an den Lastaufnehmer angekoppelt zu werden.

Dabei ist in einer zweckmäßigen konstruktiven Ausgestaltung dieses Grundprinzips vorgesehen, daß die die Parallelogrammlenker begrenzenden Längsschlitze in den Querwänden des Hohlprofils ausgebildet sind. Insbesondere können beispielsweise die Längsschlitze in den Querwänden derart ausgeführt sein, daß jeweils ihre zu den Seitenwänden weisenden Ränder mit den inneren Oberflächen der Seitenwände im wesentlichen fluchten. Alternativ kann die Gestaltung auch derart gewählt werden, daß die die Parallelogrammlenker begrenzenden Längsschlitze in den Seitenwänden ausgebildet sind. Bei dieser Alternative erfolgt die Schlitzführung insbesondere derart, daß die jeweils zu den Lenkern weisenden Ränder der Längsschlitze mit der inneren Oberfläche derjenigen Querwand fluchten, in der der betreffende Lenker ausgebildet ist.

Der Einfachheit der Herstellung ist es auch förderlich, daß in einer weiteren Ausgestaltung die Dünnstellen jeweils zwischen zwei an jedem Lenkerende einander quer zur Ebene des jeweiligen Lenkers gegenüberliegenden Ausnehmungen des Hohlprofilstücks begrenzt sind, die in ihrem zur Ebene der Lenker senkrechten Querschnitt gegeneinander konvex gewölbt sind und sich in dem Hohlprofilstück parallel zur Ebene der Lenker sowie quer zu deren Längsachse erstrecken. Diese Ausnehmungen können beispielsweise durch Bohren und/oder Fräsen ausgebildet werden.

Weiter kann zur Einstellung der Biegesteifigkeit der von den Dünnstellen gebildeten Biegestellen vorgesehen sein, daß die Parallelogrammlenker im Bereich der Dünnstellen mit das Hohlprofil quer zur Ebene der Parallelogrammlenker durchsetzenden Durchbrechungen versehen sind. Diese Durchbrechungen legen zwischen sich und den die Lenker begrenzenden Längsschlitzen die Länge der Dünnstellen quer zur Längsachse der Parallelogrammlenker und damit zusammen mit der Dicke dieser Dünnstellen die Größe des Materialquerschnitts fest, an dem die Parallelogrammlenker einerseits mit dem feststehenden Teil und andererseits mit dem Lastaufnehmer zusammenhängen. Hierdurch ist in Abhängigkeit von dem für das Hohlprofilstück verwendeten Material die Biegeelastizität der Biegestellen bestimmt.

Weiter werden diese auf dem Hohlprofilstück beruhenden Ausführungsformen zweckmäßig derart ausgebildet, daß die beiden Seitenwände in der lasteinwirkungsbedingten Auslenkrichtung des Lastaufnehmers über die mit ihrer Außenfläche in die Auslenkrichtung weisende Querwand hinaus verlängert sind. Auf diese Weise kann die Kraftmeßvorrichtung mit den Verlängerungen der beiden Seitenwände auf einer Grundplatte, beispielsweise eines Waagengehäuses, festgelegt werden, wobei der durch die Verlängerungen bedingte Abstand zwischen der Grundplatte und dem der Grundplatte benachbarten Parallelogrammlenker einen ausreichenden Spielraum für eine Auslenkung des Lastaufnehmers unter Last zur Verfügung stellt.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:
- Fig. 1: eine perspektivische Ansicht eines feststehenden Teils einer Wägezelle,
- Fig. 2: eine perspektivische Ansicht einer in einem einstückigen Materialblock ausgebildeten Vorrichtung zur Übertragung der zu messenden Kraft,
- Fig. 3: eine teilweise geschnittene Ansicht einer aus den in Fig. 1 und 2 dargestellten Teilen zusammengesetzten Wägezelle,
- Fig. 4: eine seitliche Ansicht einer gegenüber Fig. 2 geringfügig abgewandelten Ausführungsform der zur Übertragung der zu messenden Kraft dienenden Vorrichtung,
- Fig. 5: eine perspektivische Ansicht der Wägezelle, in die die in Fig. 4 dargestellte Vorrichtung eingebaut ist,
- Fig. 6: eine andere geringfügige Abwandlung der in Fig. 2 dargestellten Kraftübertragungsvorrichtung,
- Fig. 7: eine Aufsicht auf die Grundplatte, an der die in Fig. 6 dargestellte Vorrichtung und weitere Teile montiert sind,
- Fig. 8: eine perspektivische Ansicht einer anderen Ausführungsform der Wägezelle von der Seite des Meßwandlers her,
- Fig. 9: eine seitliche Aufsicht auf die in Fig. 8 dargestellte Wägezelle,
- Fig. 10: eine perspektivische Ansicht einer abgewandelten Form der in Fig. 8 und 9 dargestellten Wägezelle von der Seite des Lastaufnehmers her,
- Fig. 11a & Fig. 11b: perspektivische Ansichten zweier Ausführungsformen, bei denen eine Parallelogrammführung aus einem Hohlprofilstück vorgesehen ist.

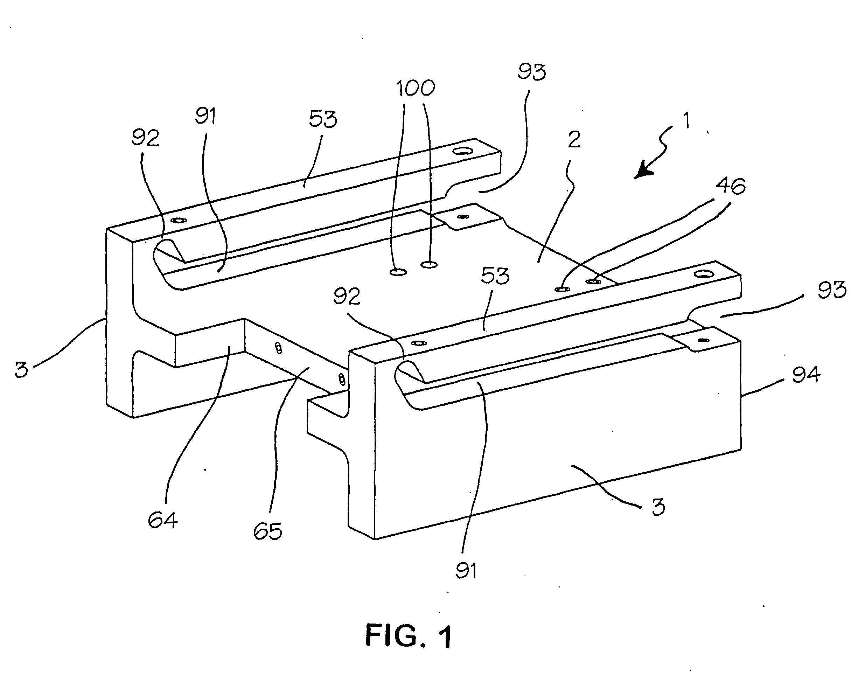

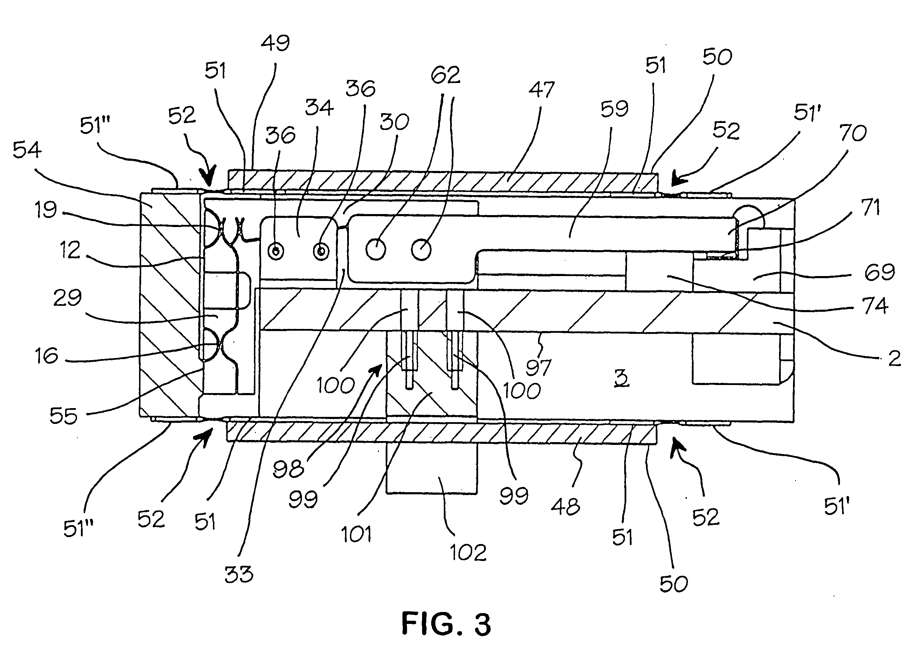

In einer in Fig. 3 in teilweise geschnittener Ansicht dargestellten Wägezelle dient ein in Fig. 1 perspektivisch dargestellter Abschnitt eines H-Profils als feststehendes Teil 1. Es weist eine den Querbalken der H-Form bildende ebene Grundplatte 2 auf. An zwei zueinander parallelen Endbereichen der Grundplatte 2 erstrecken sich zueinander parallele, im wesentlichen rechteckförmige Seitenplatten 3, die die beiden senkrechten Balken der H-Form bilden. In der Darstellung von Fig. 3 ist die zum Betrachter weisende Seitenplatte 3 weggeschnitten, so daß dort nur eine Aufsicht auf die dem Betrachter abgewandte Seitenplatte 3 und die Grundplatte 2 in einem zu ihrer Ebene senkrechten Schnitt sichtbar ist. Durch eine entsprechende Wahl der Materialstärke der Grundplatte 2 und der Seitenplatten 3 ist der feststehende Teil 1 sehr formstabil ausgebildet.

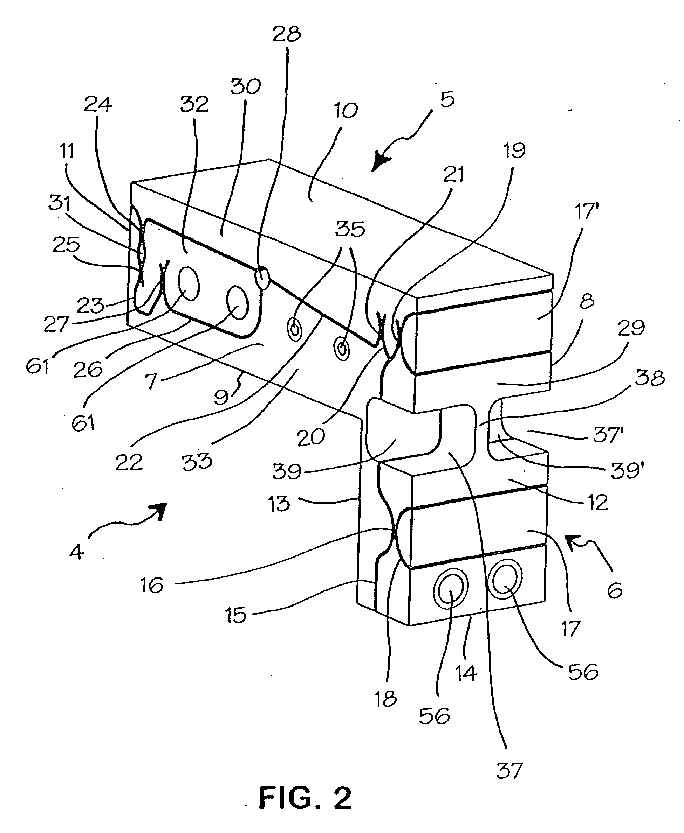

Auf der Grundplatte 2 ist in bezug auf die beiden Seitenplatten 3 mittig ein in Fig. 2 perspektivisch dargestellter einstückiger Materialblock 4 einer Vorrichtung zur Übertragung der zu messenden Kraft festgelegt. Der Materialblock 4 ist in der zu den Seitenplatten 3 parallelen Ebene gesehen L-förmig, wobei seine L-Schenkel 5, 6 durch zwei sich parallel zu den Seitenplatten 3 erstreckende seitliche Endflächen 7, 8 begrenzt sind. Außerdem ist der in Fig. 2 waagrechte L-Schenkel 5 zwischen den beiden seitlichen Endflächen 7, 8 von einer dazu senkrechten ebenen Unterseite 9, einer dazu parallelen ebenen Oberseite 10 und an seinem dem in Fig. 2 senkrechten L-Schenkel 6 entgegengesetzten Ende durch eine zu den seitlichen Endflächen 7, 8 sowie zur Unterseite 9 und Oberseite 10 senkrechte Stirnseite 11 begrenzt. Der mit dem waagrechten L-Schenkel 5 zusammenhängende senkrechte L-Schenkel 6 ist von den seitlichen Endflächen 7, 8 sowie einer ebenen Vorderseite 12 sowie einer ebenen Rückseite 13 begrenzt, die sich zwischen den seitlichen Endflächen 7, 8 erstrecken. An seinem dem waagrechten L-Schenkel 5 abgewandten Ende ist er durch eine zur Unterseite 9 des waagrechten Schenkels 5 parallele Stirnseite 14 begrenzt.

In dem senkrechten L-Schenkel 6 ist eine den Materialblock 4 senkrecht zu den seitlichen Endflächen 7, 8 durchsetzende dünne Schnittlinie 15 ausgebildet, die in Fig. 2 lediglich durch eine Erhöhung der Strichstärke angedeutet ist. Diese dünne Schnittlinie 15 verläuft ausgehend von der unteren Stirnseite 14 zunächst ein Stück parallel zur Rückseite 13 und weist dann einen zur Vorderseite 12 hin konvex gewölbten Verlauf auf, durch den eine Dünnstelle 16 gebildet wird. Die Dünnstelle 16 ist an ihrer zur Vorderseite 12 weisenden Seite durch eine der konvexen Wölbung der Schnittlinie 15 spiegelbildlich entgegengesetzte konvexe Wölbung begrenzt, die dadurch gebildet ist, daß von der Vorderseite 12 her ein zylindersegmentförmiger Materialbereich 17 ausgenommen ist. Dieser Materialbereich 17, der ebenfalls durch die Bildung einer dünnen Schnittlinie 18 abgetrennt worden ist, ist der Deutlichkeit halber in Fig. 2 eingezeichnet, wenngleich er durch die dünne Schnittlinie 18 vollständig abgetrennt und im fertigen Zustand herausgenommen ist. Im Anschluß an ihren die Dünnstelle 16 begrenzenden gewölbten Verlauf erstreckt sich die dünne Schnittlinie 15 wieder ein Stück parallel zur Rückseite 13 und bildet dann nahe der Oberseite 10 erneut eine zur Vorderseite 12 weisende konvexe Wölbung zur Begrenzung einer weiteren Dünnstelle 19, die auf ihrer zur Vorderseite 12 weisenden Seite von einer zur Wölbung der dünnen Schnittlinie 15 spiegelbildlich gewölbten Ausnehmung begrenzt ist, welche durch einen dem Materialbereich 17 entsprechenden herausgetrennten Materialbereich 17' gebildet ist. Letzterer ist ebenso wie der Materialbereich 17 der Deutlichkeit halber in Fig. 2 im nicht herausgenommenen Zustand dargestellt.

Im Übergangsbereich zwischen dem geradlinigen Verlauf und dem die weitere Dünnstelle 19 begrenzenden gewölbten Verlauf zweigt von der dünnen Schnittlinie 15 eine dazu spiegelbildlich konvex gewölbte dünne Schnittlinie 20 ab. Letztere begrenzt eine Dünnstelle 21, die auf ihrer zur Stirnseite 11 des L-Schenkels 5 weisenden anderen Seite von einer zur dünnen Schnittlinie 20 spiegelbildlich konvex gewölbten dünnen Schnittlinie 22 begrenzt ist, welche sich im Anschluß an ihren konvex gewölbten Verlauf stückweise geradlinig und etwas zur Oberseite 10 hin konvergierend längs des L-Schenkels 5 bis in die Nähe seiner Stirnseite 11 erstreckt. Dort biegt die dünne Schnittlinie 22 unter Bildung einer zur Stirnseite 11 weisenden konvexen Wölbung um, verläuft anschließend ein Stück geradlinig parallel zur Stirnseite 11 und endet im Anschluß daran in einer weiteren zur Stirnseite 11 weisenden konvexen Wölbung. Diesen beiden konvexen Wölbungen der dünnen Schnittlinie 22 stehen dazu spiegelbildlich geformte konvexe Wölbungen und ein dazwischenliegender geradliniger Verlauf einer von der Stirnseite 11 ausgehenden dünnen Schnittlinie 23 gegenüber. Durch die beiden Paare einander gegenüberstehender konvexer Wölbungen der dünnen Schnittlinien 22 und 23 sind Dünnstellen 24, 25 begrenzt, die in der zur Stirnseite 11 parallelen Richtung übereinanderliegen. Im Anschluß an die zur Unterseite 9 des L-Schenkels 5 weisende Dünnstelle 25 biegt die dünne Schnittlinie 23 wieder in Richtung auf die Oberseite 10 hin und bildet in ihrem Endbereich eine zur Vorderseite 12 hin gerichtete konvexe Wölbung, der ein dazu spiegelbildlich konvex gewölbter Endbereich einer dünnen Schnittlinie 26 gegenüberliegt. Diese einander gegenüberliegenden konvexen Wölbungen begrenzen eine Dünnstelle 27. Im Anschluß an ihre die Dünnstelle 27 begrenzende konvexe Wölbung verläuft die dünne Schnittlinie 26 ein Stück in Richtung auf die Vorderseite 12 und biegt dann in Richtung auf die Oberseite 10 hin ab, wobei sie schließlich in eine auf der dünnen Schnittlinie 22 gelegene Bohrung 28 mündet. Letztere dient zum Einführen bzw. Entnehmen eines Funkenerosionsdrahtes, mit dem sämtliche dünnen Schnittlinien des Materialblocks 4 erzeugt werden.

Durch die dünnen Schnittlinien 15, 18, 20, 22, 23 und 26 sind in dem Materialblock 4 durchgehende Ausnehmungen geringer Weite geschaffen, welche verschiedene Materialbereiche begrenzen. So ist zwischen der dünnen Schnittlinie 15 und der nach Herausnahme der Materialbereiche 17, 17' verbleibenden Vorderseite 12 des L-Schenkels 6 ein als Koppelglied 29 dienender Materialbereich begrenzt, der dank seiner beiden als Biegestellen wirksamen Dünnstellen 16, 19 in der zu den seitlichen Endflächen 7, 8 parallelen Ebene biegeelastisch ist. An der Dünnstelle 19 hängt mit dem Koppelglied 29 ein zwischen der dünnen Schnittlinie 22 und der Oberseite 10 des L-Schenkels 5 begrenzter Materialbereich zusammen, welcher als Hebel 30 dient. Die Schwenkachse dieses Hebels wird durch die Dünnstelle 21 gebildet. An seinem der Dünnstelle 19 entgegengesetzten Ende hängt der Hebel 30 im Bereich der Dünnstelle 24 mit dem von den dünnen Schnittlinien 22 und 23 zwischen den Dünnstellen 24 und 25 begrenzten Materialbereich zusammen, welcher ein weiteres Koppelglied 31 bildet.

Der durch den sich zwischen den Dünnstellen 25 und 27 erstreckenden Abschnitt der dünnen Schnittlinie 23, die dünne Schnittlinie 26 und den sich zwischen der Bohrung 28 und der Dünnstelle 24 erstreckenden Abschnitt der dünnen Schnittlinie 22 begrenzte Materialbereich bildet einen weiteren Hebel 32. Dagegen bildet der zwischen den beiden Hebeln 30, 32 einerseits und der Unterseite 9 andererseits begrenzte Materialbereich des L-Schenkels 5 zusammen mit dem zwischen dem Koppelglied 29 und der Rückseite 13 des L-Schenkels 6 begrenzten Materialbereich einen zur Festlegung an der Grundplatte 2 dienenden Materialbereich 33.

Alle Dünnstellen 16, 19, 21, 24, 25 und 27 stellen Biegestellen dar, durch die Biegelinien bestimmt sind, um die die an diesen Dünnstellen zusammenhängenden Materialbereiche verschwenkbar sind. Dabei ist die Anordnung derart getroffen, daß die durch die Dünnstellen 19, 21 und 24 bestimmten Biegelinien auf ein und derselben Geraden liegen, was bedeutet, daß die durch die Biegelinien der Dünnstellen 19 und 24 bestimmten Kraftangriffspunkte des Hebels 30 mit dessen durch die Biegelinie der Dünnstelle 21 bestimmten Schwenkachse auf dieser Geraden fluchten.

In der Ausführungsform von Fig. 3 dient die Unterseite 9 (Fig. 2) des an der Grundplatte 2 festgelegten Materialbereichs 33 des Materialblocks 4 als Anlagefläche zum formschlüssigen Eingriff mit dem zum Materialblock 4 weisenden Oberflächenbereich der Grundplatte 2. Zur in bezug auf die beiden Seitenplatten 3 mittigen Festlegung des Materialblocks 4 erstrecken sich parallel zu den beiden seitlichen Endflächen 7, 8 des Materialblocks 4 (Fig. 2) von der Grundplatte 2 aus rechtwinklig abstehende sowie mit letzterer verbundene Befestigungsteile 34. Zwischen diesen Befestigungsteilen 34 und den ihnen zugewandten seitlichen Endflächen 7, 8 besteht jeweils ein Abstand, der durch Abstandshalter (nicht dargestellt) überbrückt ist. Im Bereich dieser Abstandshalter sind in dem festgelegten Materialbereich 33 zwei durchgehende Bohrungen 35 mit zu den seitlichen Endflächen 7, 8 senkrechten Achsen (Fig. 2) ausgebildet. Zwei die Bohrungen 35 und dazu deckungsgleiche Löcher der Befestigungsteile 34 durchsetzende Schraubbolzen 36 bewirken die Befestigung des Materialblocks 4 an der Grundplatte 2.

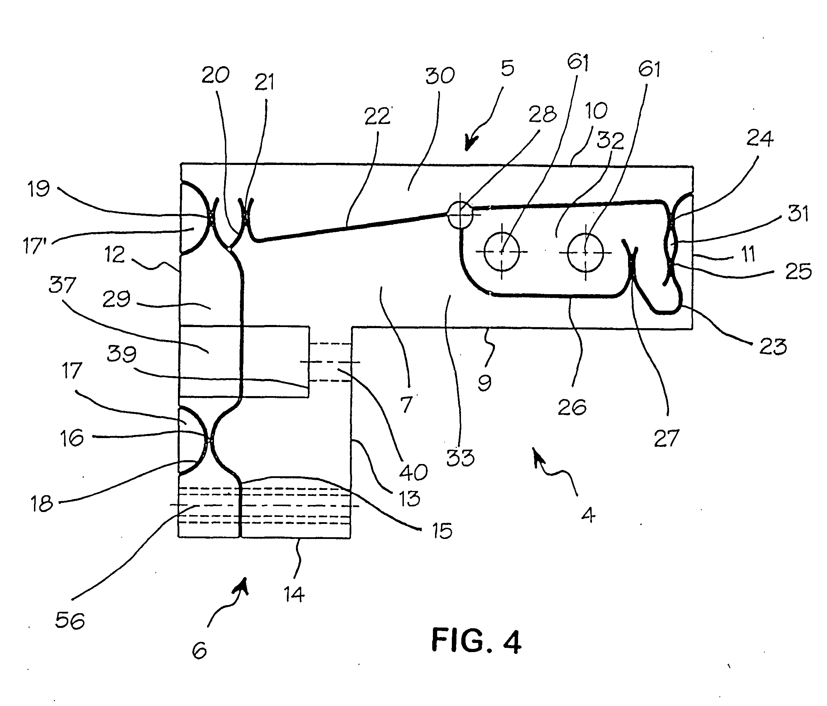

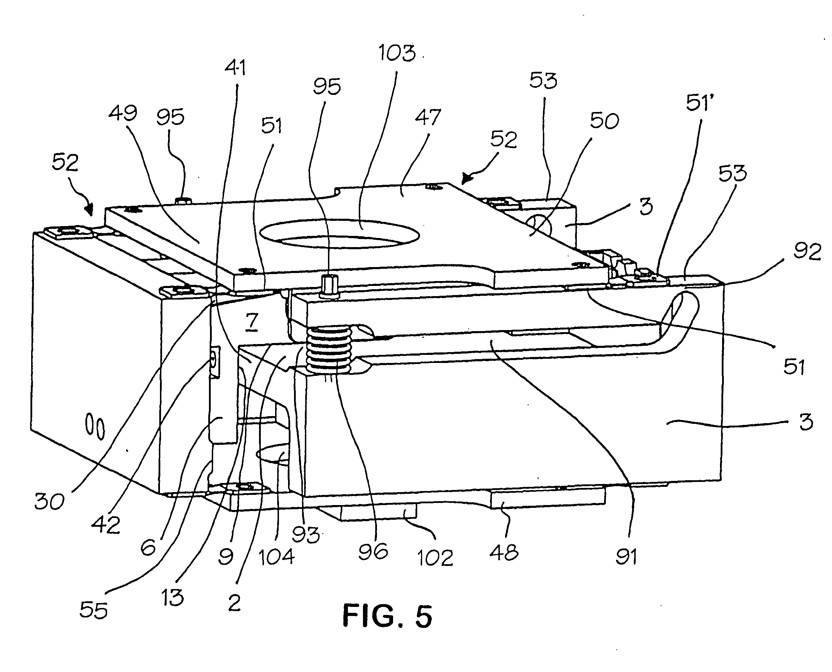

Zu dem in Fig. 2 dargestellten Materialblock 4 und seiner in Fig. 3 dargestellten Befestigung an der Grundplatte 2 der Wägezelle besteht die in den Fig. 4 und 5 dargestellte alternative Befestigungsmöglichkeit. Der in Fig. 4 dargestellte Materialblock entspricht hinsichtlich seiner Form und der Ausbildung der die Hebel 30, 32 sowie die Koppelglieder 29, 31 bildenden Materialbereiche durch die dünnen Schnittlinien 15, 18, 20, 22, 23 und 26 vollständig dem in Fig. 2 dargestellten Materialblock 4. In Fig. 4 sind daher für die übereinstimmenden Teile dieselben Bezugszeichen verwendet wie in Fig. 2. Hinsichtlich dieser Bezugszeichen wird auf die Beschreibung von Fig. 2 verwiesen.

Ein Unterschied besteht lediglich in der Art der Befestigung des Materialblocks 4 an der Grundplatte 2. Noch in Übereinstimmung mit Fig. 2 sind auch bei der in Fig. 4 dargestellten Ausführungsform in dem in dem L-Schenkel 6 ausgebildeten Koppelglied 29 sowie dem daran angrenzenden Bereich des L-Schenkels 6 symmetrisch zu der zu den seitlichen Endflächen 7, 8 parallelen Mittelebene des Materialblocks 4 zwei sich von der Vorderseite 12 in Richtung auf die Rückseite 13 erstreckende Ausnehmungen 37, 37' ausgebildet, in deren Bereich sich das Koppelglied 29 zu einem sich in der Richtung der Mittelebene erstreckenden schmalen Steg 38 verjüngt, welcher dem Koppelglied 29 eine Biegeelastizität quer zur Mittelebene verleiht. Abweichend von Fig. 2 ist in den zwischen der Rückseite 13 und den dazu parallelen Endflächen 39, 39' der Ausnehmungen 37, 37' begrenzten Materialbereichen beidseits des schmalen Steges 38 je eine sich parallel zur Längsrichtung des L-Schenkels 5 erstreckende Bohrung 40 ausgebildet, wogegen die Bohrungen 35 der in Fig. 2 dargestellten Ausführungsform nicht vorhanden sind.

Gemäß Fig. 5 dienen die Unterseite 9 des L-Schenkels 5 und ein daran angrenzender Bereich der Rückseite 13 des L-Schenkels 6 als Anlagefläche, die mit der Grundplatte 2 an einem zu deren Ebene parallelen Oberflächenbereich sowie einem sich quer dazu erstreckenden stirnseitigen Oberflächenbereich 41 formschlüssig in Eingriff steht. Durch zwei die Bohrungen 40 durchsetzende, sich parallel zur Ebene der Grundplatte 2 erstreckende und in Gewindebohrungen der Grundplatte 2 eingeschraubte Schraubbolzen 42 ist der Materialbereich 33 des Materialblocks 4 an der Grundplatte 2 festgespannt.

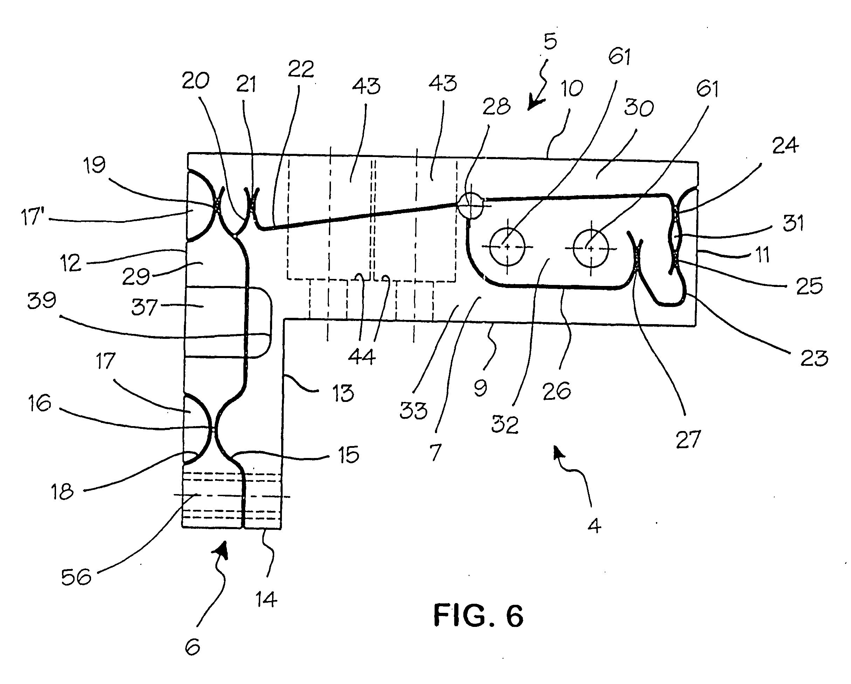

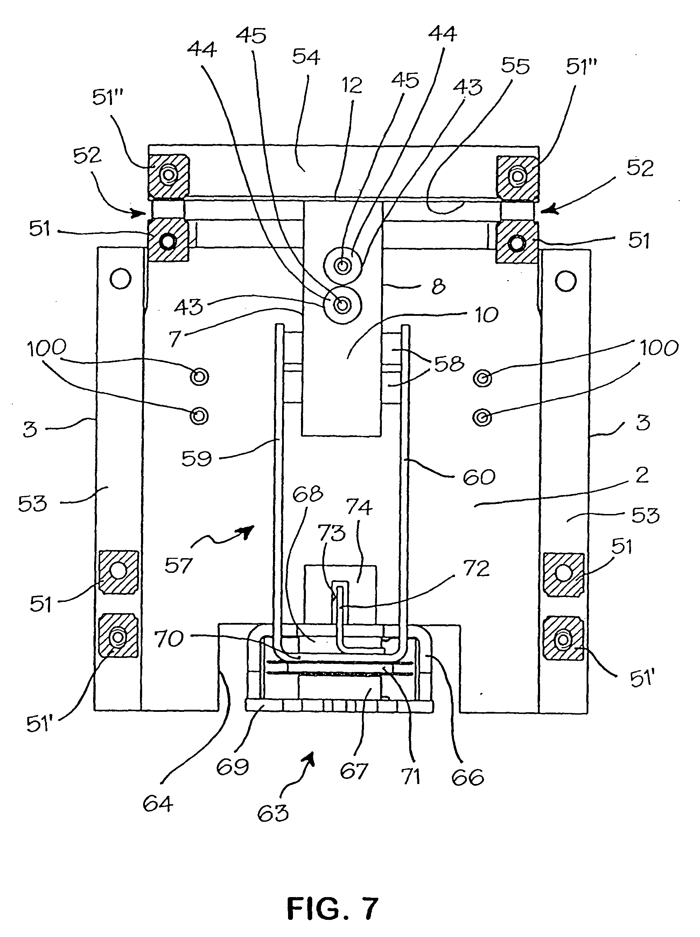

Die Fig. 6 und 7 zeigen eine weitere Alternative der Befestigung des Materialblocks 4 an der Grundplatte 2. Der in Fig. 6 dargestellte Materialblock 4 stimmt hinsichtlich seiner Form und der Ausbildung der beiden Hebel 30, 32 sowie der Koppelglieder 29 und 31 durch die dünnen Schnittlinien 15, 18, 20, 22, 23 und 26 mit den in Fig. 2 und 4 dargestellten Ausführungsformen überein. Übereinstimmung besteht auch hinsichtlich der Ausnehmungen 37, 37', die der Ausbildung des schmalen Steges 38 des Koppelgliedes 29 dienen. Für die übereinstimmenden Teile sind in Fig. 6 dieselben Bezugszeichen verwendet wie in den Fig. 2 und 4, und es wird auf die diesbezügliche Beschreibung der Fig. 2 und 4 verwiesen.

Der in Fig. 6 dargestellte Materialblock 4 unterscheidet sich von den Fig. 2 und 4 durch das Fehlen der Bohrungen 35 bzw. 40. Statt dessen sind in dem L-Schenkel 5 zwei sich zwischen dessen Unterseite 9 und dessen Oberseite 10 erstreckende Bohrungen 43 ausgebildet, deren Durchmesser sich innerhalb des an der Grundplatte 2 festgelegten Materialbereichs 33 gegenüber dem Durchmesser des an der Oberseite 10 mündenden Bereichs der Bohrungen 43 unter Bildung einer Schulter 44 verjüngt.

Aus der in Fig. 7 dargestellten Aufsicht auf die Grundplatte 2 und die Oberseite 10 des darauf angeordneten einstückigen Materialblocks 4 ist ersichtlich, daß die Unterseite 9 des L-Schenkels 5 als Anlagefläche für einen formschlüssigen Eingriff mit einem bezüglich der beiden Seitenplatten 3 mittigen Oberflächenbereich der Grundplatte 2 dient. Ferner sind dort die Köpfe zweier Schraubbolzen 45 sichtbar, die sich an den Schultern 44 abstützen, den zwischen den Schultern 44 und der Unterseite 9 begrenzten Materialbereich des L-Schenkels 5 durchsetzen und in Gewindebohrungen 46 der Grundplatte 2 (Fig. 1) eingeschraubt sind, wodurch der Materialbereich 33 an der Grundplatte 2 festgespannt ist.

Abgesehen von den vorstehend erläuterten Unterschieden in der Befestigung des Materialblocks 4 an der Grundplatte 2 stimmt der aus den Fig. 1, 3 und 5 ersichtliche übrige Aufbau der Wägezelle für die beschriebenen drei Arten der Befestigung völlig überein. Danach erstrecken sich beidseits der Grundplatte 2 in zu deren Ebene parallelen Ebenen zwei plattenförmige Lenker 47, 48. Jeder der Lenker 47, 48 besteht aus einem steifen plattenförmigen Teil, an dessen beiden sich quer zu der zu den Seitenplatten 3 parallelen Längsrichtung der Lenker 47, 48 erstreckenden Endbereichen 49, 50 die Befestigungsenden 51 je zweier Biegelager 52 festgelegt sind. Die den mit dem Endbereich 50 der Lenker 47, 48 verbundenen Befestigungsenden 51 entgegengesetzten Befestigungsenden 51' der beiden Biegelager 52 fluchten mit zu den Ebenen der Lenker 47, 48 parallelen Randflächenbereichen 53 der Seitenplatten 3 und sind auf diesen Randflächenbereichen 53 befestigt. Dabei sind die Randflächenbereiche 53 an den Befestigungsstellen gegenüber dem übrigen Verlauf dieser Randflächenbereiche geringfügig erhöht, um einen Spielraum für eine Biegebewegung der Lenker 47, 48 um die von den Biegelinien der Biegelager 52 gebildete, parallel zur Ebene der Lenker verlaufende Biegeachse zur Verfügung zu stellen. Diese geringfügige Erhöhung ist allerdings in den Fig. 1, 3, 5 und 7 nicht dargestellt.

Von ihren mit den Seitenplatten 3 verbundenen Befestigungsenden 51' aus erstrecken sich die Lenker 47, 48 in ihrer Längsrichtung bis zu einem an der Vorderseite 12 des Materialblocks 4 angeordneten Lastaufnehmer 54, der mit Befestigungsenden 51'' der an ihren dazu entgegengesetzten Befestigungsenden an dem Endbereich 49 jedes der Lenker 47, 48 festgelegten Biegelager 52 verbunden ist. Auf diese Weise bilden die an den Seitenplatten 3 befestigten Lenker 47, 48 zusammen mit dem Lastaufnehmer 54 eine Parallelogrammführung, deren Parallelogrammebene durch die Längsrichtung der Lenker 47, 48 und die Auslenkrichtung des Lastaufnehmers 54 bestimmt ist.

Aus den Fig. 3 und 5 ist ersichtlich, daß der Lastaufnehmer 54 an seiner zur Vorderseite 12 des Materialblocks 4 weisenden Seite einen geringfügig vorspringenden Bereich 55 aufweist, mit dem er an dem zwischen der Dünnstelle 16 des Koppelgliedes 29 und der Stirnseite 14 begrenzten Oberflächenbereich des Koppelgliedes 29 anliegt und an letzterem durch Schraubbolzen festgelegt ist, die in dort vorgesehenen Gewindebohrungen 56 des Koppelgliedes 29 (Fig. 2, 4 und 6) verankert sind.

Aus der in Fig. 3 dargestellten teilweise geschnittenen Seitenansicht der Wägezelle und der in Fig. 7 dargestellten Aufsicht, in der der Lenker 47 abgenommen ist, geht weiter hervor, daß an dem in dem Materialblock 4 ausgebildeten weiteren Hebel 32 eine U-förmige Hebelverlängerung 57 mit ihren den weiteren Hebel 32 unter Zwischenschaltung von Abstandshaltern 58 umgreifenden U-Schenkeln durch zwei Bohrungen 61 des weiteren Hebels 32 (Fig. 2, 4 und 6) durchsetzende Schraubbolzen 62 befestigt ist. Die U-Schenkel 59, 60 erstrecken sich parallel zu den Ebenen der Grundplatte 2 und der Lenker 47, 48 in Richtung auf den dem Lastaufnehmer 54 entgegengesetzten Endbereich des feststehenden Teils 1. Dort ist das als Meßwandler dienende elektromagnetische Kraftkompensationssystem 63 festgelegt. Zu diesem Zweck ist in diesem Bereich der Grundplatte 2 eine Ausnehmung 64 (Fig. 1) ausgebildet, an deren sich quer zur Parallelogrammebene sowie quer zur Ebene der Grundplatte erstreckenden Stirnfläche 65 ein Schenkel 66 eines zwei plattenförmige Permanentmagnete 67, 68 umschließenden Magnetjoches 69 festgeschraubt ist.

An dem die in das Magnetjoch 69 hineinragenden U-Schenkel 59, 60 verbindenden U-Steg 70 der Hebelverlängerung 57 ist eine in einen zwischen den beiden Permanentmagneten 67, 68 gebildeten Luftspalt hineinragende Kompensationsspule 71 angeordnet. Außerdem ist an dem U-Steg 70 eine Positionsgeberfahne 72 befestigt, die in einen Positionserfassungsspalt 73 eines an dem Magnetjoch 69 festgelegten Lichtschrankenpositionsgebers 74 hineinragt.

Bei den vorstehend anhand der Fig. 1 bis 7 erläuterten Ausführungsformen wird die zu messende Kraft in den Lastaufnehmer 54 in der Richtung seiner durch die Parallelogrammführung bestimmten Auslenkung eingeleitet. Zu diesem Zweck ist beispielsweise unmittelbar an dem Lastaufnehmer 54 ein Waagschalenträger (nicht dargestellt) angeordnet. Der Lastaufnehmer 54 kann jedoch auch auf andere Weise mit der zu messenden Kraft gekoppelt sein. Die mit dem Lastaufnehmer 54 kräftemäßig gekoppelten Hebel 30, 32 des Materialblocks 4 und die Hebelverlängerung 57 übersetzen die zu messende Kraft. Ein durch die Kompensationsspule 71 fließender Kompensationsstrom wird durch das von dem Positionsgeber 74 gebildete Positionserfassungssignal derart geregelt, daß die durch die Wechselwirkung zwischen der Kompensationsspule 71 und dem Magnetfeld der Permanentmagnete 67, 68 hervorgerufene Kompensationskraft der in den Lastaufnehmer 54 eingeleiteten zu messenden Kraft die Waage hält. Der Wert des Kompensationsstroms stellt somit ein Maß für die zu messende Kraft dar.

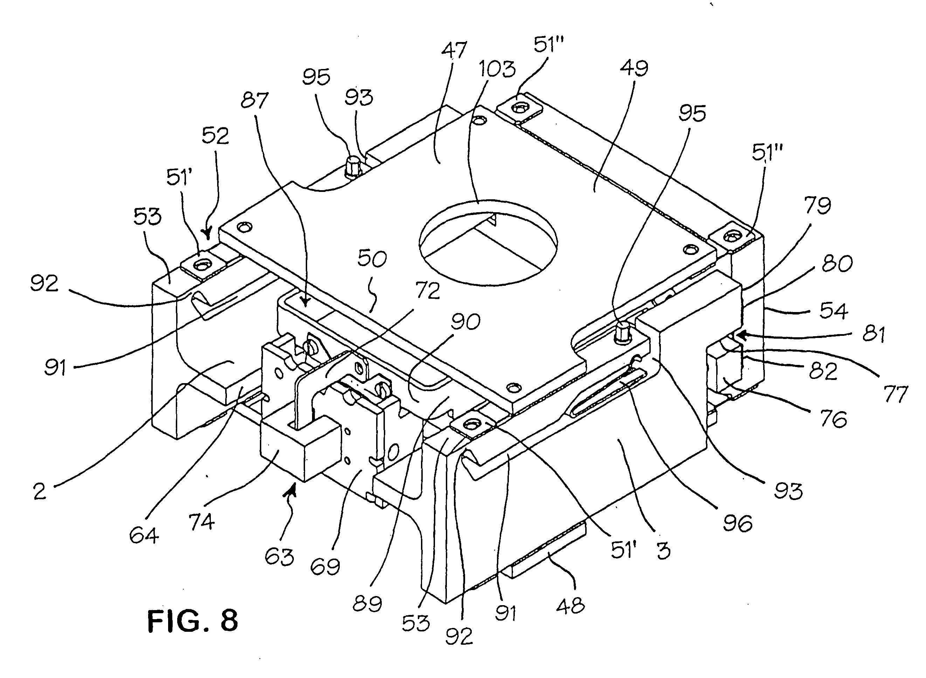

Bei den anhand der Fig. 1 bis 7 erläuterten Ausführungsformen sind die beiden der Kraftübertragung dienenden Hebel nebst deren die Hebeldrehachse bildenden Biegestellen 21, 27 und deren Koppelungsgliedern 29, 31 durch entsprechend geformte Materialbereiche des einstückigen Materialblocks 4 gebildet und durch dessen feststehenden Materialbereich 33 gegenüber der Grundplatte 2 abgestützt. Hiervon unterscheiden sich in den Fig. 8 bis 10 dargestellte Ausführungsformen durch eine andere Ausgestaltung der der Übertragung der zu messenden Kraft vom Lastaufnehmer zum Meßwandler dienenden Vorrichtung. Im übrigen entspricht der Aufbau der in Fig. 8 bis 10 dargestellten Ausführungsformen in allen wesentlichen Teilen, insbesondere hinsichtlich des feststehenden Teils 1 und der daran angelenkten Lenker 47, 48, dem aus den Fig. 1, 3, 5 und 7 ersichtlichen Aufbau, so daß für die entsprechenden Teile in den Fig. 8 bis 10 dieselben Bezugszeichen verwendet worden sind. Insoweit wird auf die vorstehende Beschreibung verwiesen.

Abweichend von den in Fig. 1 bis 7 dargestellten Ausführungsformen ist bei den in Fig. 8 bis 10 dargestellten Ausführungsformen der Hebel 75 als getrenntes Teil ausgebildet. Er weist im Bereich seines zum Lastaufnehmer 54 weisenden Endes einen Anlenkbereich 76 auf, der sich von einer zum Lastaufnehmer 54 hin offenen Ausnehmung 77 in der einen Seitenplatte 3 quer zur Parallelogrammebene bis zu einer entsprechenden Ausnehmung 77 in der anderen Seitenplatte 3 erstreckt. Die zum Lastaufnehmer 54 weisende Stirnseite 78 des Anlenkbereichs 76 fluchtet mit an die Ausnehmungen 77 angrenzenden stirnseitigen Endflächen 79 der Seitenplatten 3. Jede der Endflächen 79 dient als Befestigungsfläche für ein Befestigungsende 80 eines Biegelagers 81, deren anderes Befestigungsende 82 an der Stirnseite 78 des in die Ausnehmung 77 ragenden Endes des Anlenkbereichs 76 festgelegt ist. Die Biegelinien der beiden Biegelager 81 liegen auf einer sich quer zur Parallelogrammebene erstreckenden Achse, welche die Schwenkachse des Hebels 75 bildet.

In einem bezüglich der beiden Seitenplatten 3 mittigen Bereich weist der Anlenkbereich 76 des Hebels 75 einen in bezug auf das Biegelager 81 zum Lastaufnehmer 54 hin vorspringenden kurzen Hebelarm 83 auf, der durch ein daran befestigtes Koppelglied 84 mit einem Befestigungsvorsprung 85 des Lastaufnehmers 54 verbunden ist. Das Koppelglied ist als getrenntes Teil mit zwei Biegelinien 86 ausgebildet, zwischen denen sich ein zur Auslenkrichtung des Lastaufnehmers 54 paralleles steifes Längsteil erstreckt. Mit seinen an die Biegelinien 86 angrenzenden Endbereichen ist das Koppelglied 84 an dem Hebelarm 83 bzw. dem Befestigungsvorsprung 85 befestigt.

An der dem Hebelarm 83 in bezug auf die Biegelager 81 entgegengesetzten Seite des Anlenkbereichs 76 ist eine U-förmige Hebelverlängerung 87 ähnlich der in Fig. 7 dargestellten Hebelverlängerung 57 mit Schraubbolzen 88 befestigt. Sie erstreckt sich mit ihren U-Schenkeln 89 zu dem Kraftkompensationssystem 63, dessen Aufbau vorstehend im Zusammenhang mit Fig. 7 beschrieben worden ist. Eine Abweichung von Fig. 7 besteht lediglich insoweit, als der Positionsgeber 74 an der dem Lastaufnehmer 54 abgewandten Seite des Magnetjochs 69 angeordnet ist und die an dem U-Steg 90 angeordnete Positionsgeberfahne 72 dementsprechend angeordnet ist.

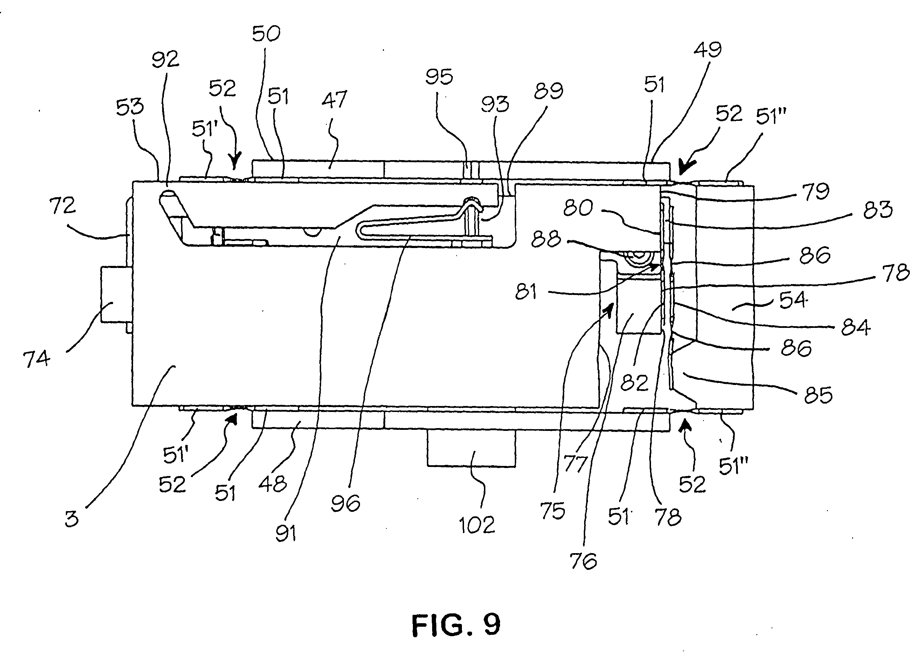

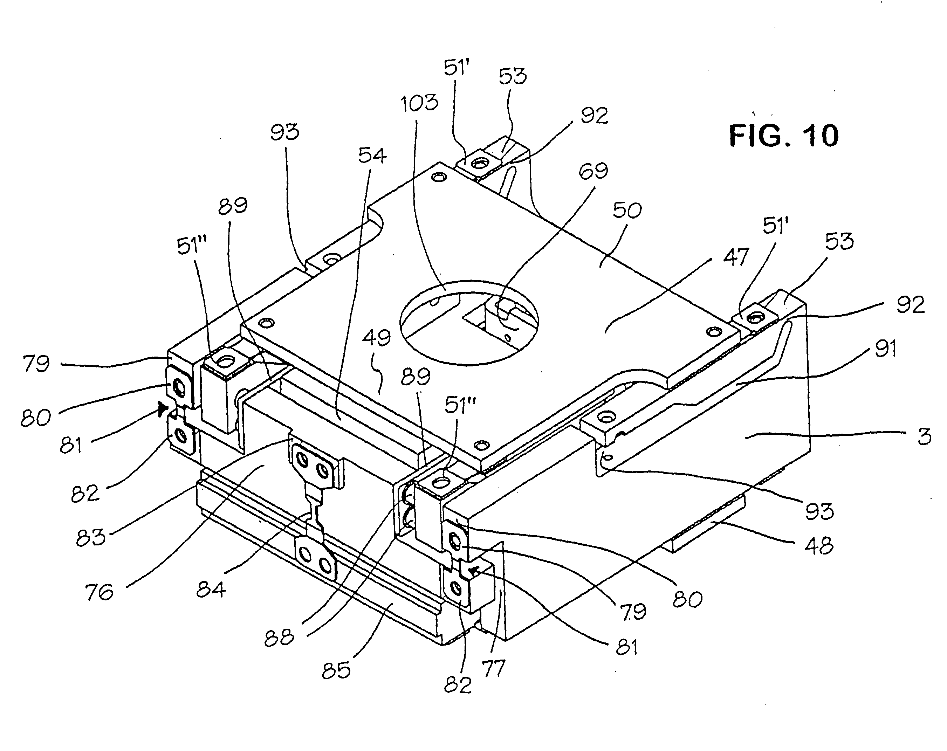

Blickt man bei der in den Fig. 8 und 9 dargestellten Ausführungsform auf den Lastaufnehmer 54 von den am Lastaufnehmer 54 festgelegten Befestigungsenden 51'' der Lenker 47, 48 in Richtung auf deren am feststehenden Teil 1 festgelegte Enden 51', so befindet sich der Anlenkbereich 76 hinter dem Lastaufnehmer 54. Hiervon unterscheidet sich eine in Fig. 10 dargestellte Ausführungsform lediglich dadurch, daß der Anlenkbereich 76 in bezug auf die vorgenannte Blickrichtung vor dem Lastaufnehmer 54 angeordnet ist, wobei dessen Befestigungsvorsprung 85 den Anlenkbereich 76 bis zur Ebene des Koppelgliedes 84 vorspringend umgreift. Im übrigen sind in Fig. 10 für die mit allen anderen beschriebenen Ausführungsformen übereinstimmenden Teile dieselben Bezugszeichen verwendet, und es wird auf die diesbezügliche Beschreibung verwiesen.

Aus den Fig. 1, 5, 8, 9 und 10 ist zu erkennen, daß bei allen vorstehend beschriebenen Ausführungsformen der Wägezelle die beiden Seitenplatten 3 in ihrem an die Befestigungsstelle 51' des in der Figurendarstellung oberen Lenkers 47 angrenzenden Bereich einen sich parallel zur Ebene der Lenker erstreckenden, durchgehenden Schlitz 91 aufweisen. Dieser ist an seinem einen Endbereich abgewinkelt bis nahe an den die Befestigungsstelle 51' tragenden Randflächenbereich 53 herangeführt und begrenzt dadurch eine Materialbrücke 92 verhältnismäßig geringer Weite. An seinem der Materialbrücke 92 entgegengesetzten Ende 93 ist der Schlitz 91 offen. Bei den in Fig. 1 und 5 dargestellten Ausführungsformen mündet das offene Ende 93 an der sich quer zur Ebene der Grundplatte 2 und quer zur Parallelogrammebene erstreckenden Stirnseite 94 der Seitenplatte 3 aus. Dagegen mündet bei den in Fig. 8, 9 und 10 dargestellten Ausführungsformen das Ende des Schlitzes 93 an dem sich parallel zur Ebene der Grundplatte 2 erstreckenden Randflächenbereich 53.

Eine den Schlitz 91 im Bereich seines offenen Endes 93 überbrückende Stellschraube 95 (Fig. 5, 8 und 9) ermöglicht es, die Weite des Schlitzes quer zur Ebene der Lenker 47, 48 zu verstellen, wobei die dünne Materialbrücke 92 als Biegestelle dient. Die Stellschraube 95 wirkt gegen ein sie im Sinne einer Aufweitung des Schlitzes 91 belastendes elastisches Element 96, das in Fig. 5 durch eine Schraubenfeder und in den Fig. 8 und 9 durch eine Blattfeder gebildet ist. Durch die Verstellung der Schlitzweite lassen sich die Eckpunkte der Parallelogrammführung genau einstellen.

In allen Figurendarstellungen weist die Richtung der in den Lastaufnehmer 54 eingeleiteten, zu messenden Kraft von oben nach unten. Aus Fig. 3 geht hervor, daß an der nach unten weisenden Oberfläche 97 der Grundplatte 2 ein Träger 98 durch Schraubbolzen 99 festgelegt ist. Die zur Festlegung der Schraubbolzen 99 in der Grundplatte 2 vorgesehenen Bohrungen 100 sind auch in den Fig. 1 und 7 sichtbar.

Im einzelnen weist der Träger 98 ein sich von der einen Seitenplatte 3 bis zur anderen Seitenplatte 3 erstreckendes Querteil 101 auf, in dem die Schraubbolzen 99 verankert sind.

Von dem sich bis in die Nähe des unteren Lenkers 48 erstreckenden Querteil 101 aus erstreckt sich ein in bezug auf den Abstand zwischen den beiden Seitenplatten 3 mittiger Schaft 102 quer zu den Ebenen der Grundplatte 2 und der Lenker 47, 48 mit Spiel durch eine in dem unteren Lenker 48 ausgebildete Öffnung hindurch und ragt nach unten über den unteren Lenker 48 hinaus. An dem herausragenden Bereich des Schaftes 102 kann die Wägezelle, beispielsweise an der Grundplatte eines Waagengehäuses, stationär festgelegt werden. Aus Symmetriegründen ist in dem oberen Lenker 47 eine der dem Durchtritt des Schaftes 102 dienenden Öffnung des unteren Lenkers 48 entsprechende Öffnung 103 ausgebildet. Diese ist in den Fig. 5, 8 und 10 erkennbar. Die dem Durchtritt des Schaftes 102 dienende Öffnung 104 des unteren Lenkers 48 ist teilweise in Fig. 5 sichtbar.

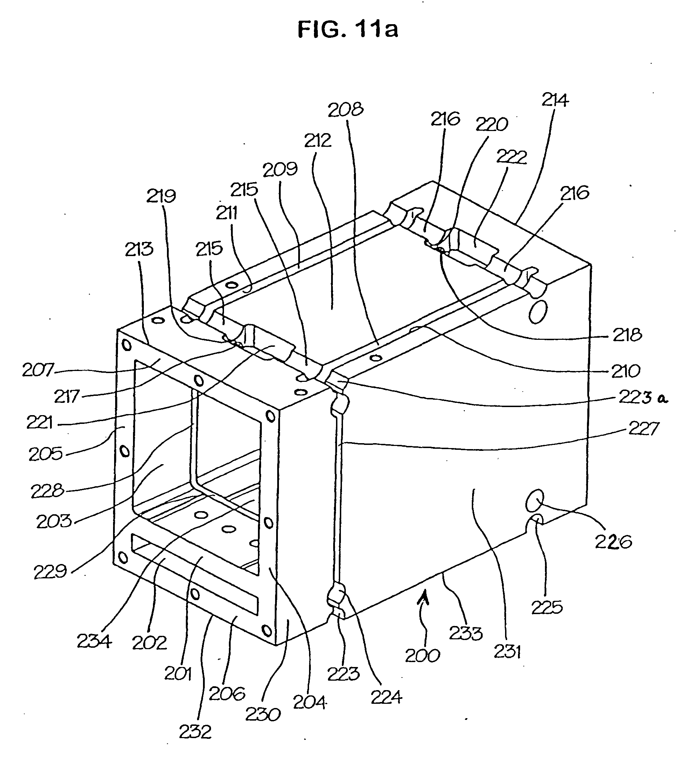

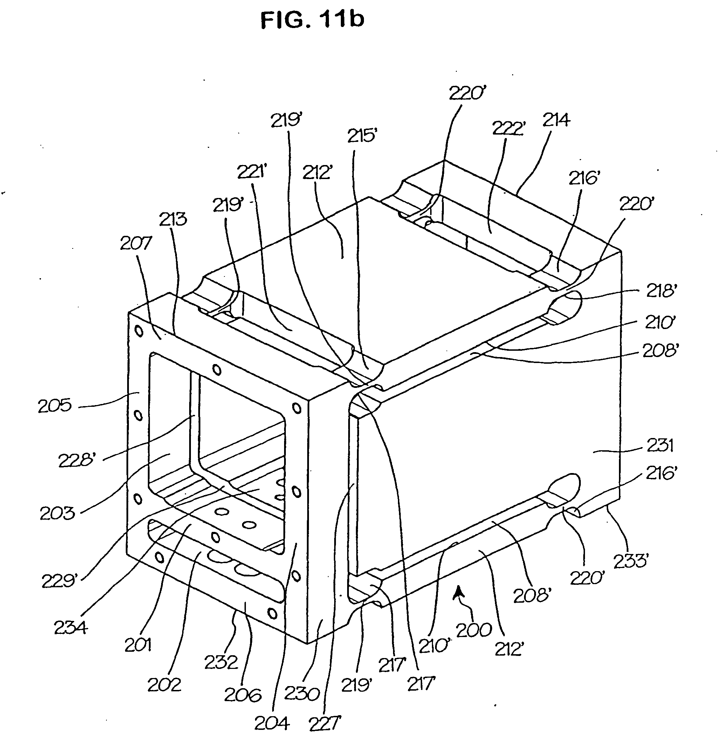

Die beiden in Fig. 11a und 11b dargestellten Ausführungsformen weisen wesentliche Übereinstimmungen des prinzipiellen Aufbaus auf, die in der nachfolgenden Beschreibung mit denselben Bezugszeichen bezeichnet sind. Beiden Ausführungsformen ist ein Hohlprofilstück 200 von rechteckigem Außenquerschnitt gemeinsam, welches von einer Länge eines extrudierten Strangprofils abgeschnitten ist. Der ebenfalls querschnittlich rechteckige Innenraum des Hohlprofilstücks 200 wird von einem Innensteg 201 in zwei querschnittlich rechteckige Teilräume 202 und 203 unterteilt. Letztere sind von zwei sich quer zur Ebene des Innenstegs 201 erstreckenden und mit dem Innensteg 201 einstückig verbundenen Seitenwänden 204 und 205 begrenzt sowie von zwei parallel zur Ebene des Innenstegs 201 verlaufenden Querwänden 206, 207, die mit den dem Innensteg 201 abgewandten Enden der Seitenwände 204, 205 einstückig zusammenhängen. Dadurch ist also der kleinere Teilraum 202 von dem Innensteg 201, den sich in Richtung auf die Querwand 206 erstreckenden Bereichen der Seitenwände 204, 205 und der Querwand 206 umschlossen, während der größere Teilraum 203 von dem Innensteg 201, den sich zu der der Querwand 206 entgegengesetzten Querwand 207 hin erstreckenden Bereichen der Seitenwände 204, 205 sowie der Querwand 207 umschlossen ist.

Die in Fig. 11a dargestellte Ausführungsform weist in der in Fig. 11a oberen Querwand 207 zwei durchgehende Längsschlitze 208, 209 auf, die sich in der zur rechteckigen Querschnittsform senkrechten Längsrichtung des Hohlprofilstücks 200 erstrecken. Die Lage der Längsschlitze 208, 209 quer zur Längsrichtung des Hohlprofilstücks 200 ist in Fig. 11a derart gewählt, daß jeweils der zur jeweils benachbarten Seitenwand 204, 205 weisende Rand 210 bzw. 211 der Längsschlitze 208 bzw. 209 mit der inneren Oberfläche der betreffenden Seitenwand 204 bzw. 205 fluchtet. Die Längsschlitze 208, 209 begrenzen zwischen sich einen in Fig. 11a oberen Parallelogrammlenker 212.

Im Bereich der jeweils in einem Abstand von den stirnseitigen Endkanten 213, 214 des Hohlprofilstücks 200 einander paarweise quer zur Längsrichtung gegenüberliegenden Enden der Längsschlitze 208, 209 sind in dem Hohlprofilstück 200 zwei Paare von Ausnehmungen ausgebildet. In Fig. 11a sind von diesen Paaren jeweils die von der äußeren Oberfläche des oberen Parallelogrammlenkers 212 her ausgebildeten Ausnehmungen 215, 216 deutlich erkennbar, die in ihrem zur Ebene des Parallelogrammlenkers 212 senkrechten Querschnitt kreisförmig konvex nach innen gewölbt sind und sich sowohl über die zwischen den Längsschlitzen 208, 209 begrenzte Breite des Parallelogrammlenkers 212 als auch die damit fluchtenden Bereiche der Seitenwände 204, 205 erstrecken. Diesen von der äußeren Oberfläche her ausgebildeten Ausnehmungen liegen quer zur Ebene des Parallelogrammlenkers 212 ebensolche Ausnehmungen 217, 218 gegenüber, die von der inneren Oberfläche des Parallelogrammlenkers 212 aus konvex nach innen gewölbt sind. Die beiden Paare von Ausnehmungen 215, 217 bzw. 216, 218 begrenzen zwischen sich jeweils eine Dünnstelle 219, 220, die als elastische Biegestelle zur Auslenkung des Parallelogrammlenkers 212 dient.

Zur Einstellung der Biegesteifigkeit der Dünnstellen 219, 220 sind in dem oberen Parallelogrammlenker 212 im Bereich der beiden Paare von Ausnehmungen 215, 217 bzw. 216, 218 Durchbrechungen 221, 222 ausgebildet, die das jeweilige Ende des Parallelogrammlenkers 212 quer zu dessen Ebene vollständig durchsetzen. Diese Durchbrechungen 221, 222 bestimmen zusammen mit den Längsschlitzen 208, 209 die Länge der Erstreckung der Dünnstellen 219, 220 quer zur Längsrichtung des Parallelogrammlenkers 212.

Den Längsschlitzen 208, 209, Ausnehmungen 215, 216, 217, 218, Dünnstellen 219, 220 und Durchbrechungen 221, 222 entsprechende Längsschlitze, Ausnehmungen, Dünnstellen und Durchbrechungen sind auch in dem in Fig. 11a nicht sichtbaren Bereich der unteren Querwand 206 sowie den daran angrenzenden Bereichen der beiden Seitenwände 204, 205 ausgebildet, wodurch dort ein dem oberen Parallelogrammlenker 212 entsprechender unterer Parallelogrammlenker gebildet ist.
Fig. 11a läßt insoweit lediglich die mit den die Dünnstellen des unteren Parallelogrammlenkers begrenzenden Ausnehmungen fluchtenden Ausnehmungen 223 bis 226 in der Seitenwand 204 erkennen.

Ein quer zur Längsrichtung gerichteter Querschlitz 227 erstreckt sich von der mit der Ausnehmung 215 fluchtenden Ausnehmung 223a der Seitenwand 204 durch letztere hindurch bis zu der mit der entsprechenden Ausnehmung des unteren Parallelogrammlenkers fluchtenden Ausnehmung 223 der Seitenwand 204. Ein ebensolcher Querschlitz 228, der die der Seitenwand 204 gegenüberliegende Seitenwand 205 durchsetzt, liegt mit dem Querschlitz 227 quer zur Längsrichtung der Parallelogrammlenker in Flucht. Ferner ist der Innensteg 201 von einem die Querschlitze 227, 228 verbindenden Querschlitz 229 durchbrochen. Auf diese Weise begrenzen die Querschlitze 227, 228 und 229 den Lastaufnehmer 230 gegen das feststehende Teil 231. Der Lastaufnehmer 230 weist also die zwischen einerseits der stirnseitigen Endkante 213 und andererseits den Querschlitzen 227 bis 229 sowie den daran angrenzenden Dünnstellen des oberen und unteren Parallelogrammlenkers begrenzten Bereiche der Seitenwände 204, 205 und Querwände 206, 207 auf, während das feststehende Teil 231 die zwischen der stirnseitigen Endkante 214 und den Querschlitzen 227, 228 begrenzten Bereiche der Seitenwände 204, 205 sowie die zwischen der Endkante 214 und den dem Lastaufnehmer 230 abgewandten Dünnstellen 220 begrenzten Bereiche der Querwände 206, 207 umfaßt.

Hiervon unterscheidet sich die in Fig. 11b dargestellte Ausführungsform im wesentlichen nur durch die Anordnung der Längsschlitze und eine damit einhergehende Anpassung der Querschlitze. Aus Fig. 11b ist ersichtlich, daß die die beiden Parallelogrammlenker 212' begrenzenden Längsschlitze in den Seitenwänden 204 und 205 ausgebildet sind, wobei in Fig. 11b lediglich die in der Seitenwand 204 vorgesehenen Längsschlitze 208' sichtbar sind, während die damit quer zur Längsrichtung fluchtenden Längsschlitze der Seitenwand 205 nicht sichtbar sind. Die jeweils zu den benachbarten Parallelogrammlenkern 212' weisenden Ränder 210' der Längsschlitze 208' fluchten dabei mit der inneren Oberfläche der Querwände 206 bzw. 207.

Weiter sind in geringfügiger Abweichung von Fig. 11a die die Dünnstellen 219', 220' begrenzenden Ausnehmungen 215', 217' bzw. 216', 218' in ihrem zur Ebene der Lenker 212' senkrechten Querschnitt nicht halbkreisförmig, sondern in der Längsrichtung langgestreckt geformt. Wie im Falle von Fig. 11a wird die quer zur Längsrichtung gemessene Länge dieser Dünnstellen 219', 220' durch Durchbrechungen 221', 222' in den beiden Lenkern 212' begrenzt.

Die den Lastaufnehmer 230 gegen das feststehende Teil 231 begrenzenden Querschlitze 227', 228' erstrecken sich zwischen den zu den inneren Oberflächen der Parallelogrammlenker weisenden Ausnehmungen 217', welche die Dünnstellen 219' an ihren einander zugewandten Seiten begrenzen. Wie im Fall von Fig. 11a verbindet der durchgehende Querschlitz 229' des Innenstegs 201 die beiden Querschlitze 227' und 228'.

In Fig. 11a und 11b sind in der von der stirnseitigen Endkante 213 umgrenzten Stirnfläche des Lastaufnehmers 230 Befestigungslöcher erkennbar, die der Befestigung eines Waagschalenträgers dienen. Die Richtung der Krafteinleitung ist in Fig. 11a und b von oben nach unten gerichtet, so daß unter Lasteinwirkung der Lastaufnehmer 230 jeweils nach unten ausgelenkt wird. Aus diesem Grund sind die Seitenwände 204, 205 im Bereich des feststehenden Teils 231 über die in die Auslenkrichtung weisende Außenfläche 232 der unteren Querwand 206 hinaus verlängert. Bei der Ausführungsform von Fig. 11a erstrecken sich diese verlängerten Seitenwandbereiche 233 zwischen der dem Lastaufnehmer 230 abgewandten stirnseitigen Endkante 214 und dem durch die Querschlitze 227, 228 von dem feststehenden Teil 231 abgetrennten Lastaufnehmer 230. Bei der Ausführungsform von Fig. 11b erstrecken sich dagegen die verlängerten Seitenwandbereiche 233' zwischen der dem Lastaufnehmer 230 abgewandten stirnseitigen Endkante 214 und der ihr nächstgelegenen Ausnehmung 216', welche die Dünnstelle 220' am der stirnseitigen Endkante 214 benachbarten Ende des Parallelogrammlenkers 212' begrenzt. Wenn das Hohlprofilstück 200 mit den verlängerten Seitenwandbereichen 233 bzw. 233' auf einer zur Ebene der Parallelogrammlenker 212 bzw. 212' parallelen Grundplatte montiert wird, besteht daher zwischen dieser Grundplatte und den zur Grundplatte weisenden Seiten des Lastaufnehmers 230 und des unteren Parallelogrammlenkers 212 bzw. 212' ein Abstand, der eine lasteinwirkungsbedingte Auslenkung zuläßt.

In beiden Ausführungsformen dient der zwischen der stirnseitigen Endkante 214 und dem Querschlitz 229 bzw. 229' begrenzte Bereich 234 des Innenstegs 201 als Grundplatte zur Abstützung der den oder die Hebel aufweisenden Kraftübertragungsvorrichtung. Der zwischen dem Querschlitz 229 und der stirnseitigen Endkante 213 des Lastaufnehmers 230 sich erstreckende Bereich 235 des Innenstegs 201 kann zur Befestigung eines mit dem Hebel der Kraftübertragungsvorrichtung verbundenen Koppelgliedes dienen, wodurch der Lastaufnehmer 230 mit dem Hebel gekoppelt ist und seine lasteinwirkungsbedingte Auslenkung auf letzteren übertragen wird.

### Verzeichnis der Bezugszeichen

- 1: feststehendes Teil
- 2: Grundplatte
- 3: Seitenplatte
- 4: einstückiger Materialblock
- 5: L-Schenkel
- 6: L-Schenkel
- 7, 8: seitliche Endflächen
- 9: Unterseite
- 10: Oberseite
- 11: Stirnseite
- 12: Vorderseite
- 13: Rückseite
- 14: Stirnseite
- 15: dünne Schnittlinie
- 16: Dünnstelle
- 17, 17': Materialbereich
- 18: dünne Schnittlinie
- 19: Dünnstelle
- 20: dünne Schnittlinie
- 21: Dünnstelle
- 22: dünne Schnittlinie
- 23: dünne Schnittlinie
- 24, 25: Dünnstellen
- 26: dünne Schnittlinie
- 27: Dünnstelle
- 28: Bohrung
- 29: Koppelglied
- 30: Hebel
- 31: weiteres Koppelglied
- 32: weiterer Hebel
- 33: Materialbereich
- 34: Befestigungsteile
- 35: Bohrungen
- 36: Schraubbolzen
- 37, 37': Ausnehmungen
- 38: schmaler Steg
- 39, 39': Endflächen
- 40: Bohrung
- 41: stirnseitiger Oberflächenbereich
- 42: Schraubbolzen
- 43: Bohrungen
- 44: Schulter
- 45: Schraubbolzen
- 46: Gewindebohrungen
- 47, 48: Lenker
- 49, 50: Endbereiche
- 51, 51', 51": Befestigungsenden
- 52: Biegelager
- 53: Randflächenbereich
- 54: Lastaufnehmer
- 55: vorspringender Bereich
- 56: Gewindebohrungen
- 57: Hebelverlängerung
- 58: Abstandshalter
- 59, 60: U-Schenkel
- 61: Bohrungen
- 62: Schraubbolzen
- 63: Kraftkompensationssystem
- 64: Ausnehmung
- 65: Stirnfläche
- 66: Schenkel
- 67, 68: Permanentmagnete
- 69: Magnetjoch
- 70: U-Steg
- 71: Kompensationsspule
- 72: Positionsgeberfahne
- 73: Positionserfassungsspalt
- 74: Positionsgeber
- 75: Hebel
- 76: Anlenkbereich
- 77: Ausnehmung
- 78: Stirnseite
- 79: Endflächen
- 80: Befestigungsende
- 81: Biegelager
- 82: Befestigungsende
- 83: Hebelarm
- 84: Koppelglied
- 85: Befestigungsvorsprung
- 86: Biegelinien
- 87: Hebelverlängerung
- 88: Schraubbolzen
- 89: U-Schenkel
- 90: U-Steg
- 91: Schlitz
- 92: Materialbrücke
- 93: Ende des Schlitzes
- 94: Stirnseite
- 95: Stellschraube
- 96: elastisches Element
- 97: Oberfläche
- 98: Träger
- 99: Schraubbolzen
- 100: Bohrungen
- 101: Querteil
- 102: Schaft
- 103: Öffnung
- 104: Öffnung
- 200: Hohlprofilstück
- 201: Innensteg (Grundplatte)
- 202, 203: Teilräume
- 204, 205: Seitenwände (Seitenplatten)
- 206, 207: Querwände
- 208, 208', 209: Längsschlitze
- 210, 211: Ränder
- 212, 212': Parallelogrammlenker
- 213, 214: stirnseitige Endkanten
- 215, 215', 216, 216': Ausnehmungen
- 217, 217', 218, 218': Ausnehmungen
- 219, 219', 220, 220': Dünnstelle
- 221, 222: Durchbrechungen
- 223 bis 226: Ausnehmungen
- 227, 227': Querschlitz
- 228, 228': Querschlitz
- 229: Querschlitz
- 230: Lastaufnehmer
- 231: feststehendes Teil
- 232: Außenfläche
- 233, 233': verlängerte Seitenwandbereiche
- 234: Bereich des Innenstegs
- 235: Bereich des Innenstegs

## Patentansprüche

1. Kraftmeßvorrichtung, insbesondere Wägezelle, mit einem zur Aufnahme der zu messenden Kraft dienenden Lastaufnehmer (54, 230), der von zwei in zwei zueinander parallelen Ebenen sich erstreckenden, in der Richtung dieser Ebenen steifen und quer zur Richtung dieser Ebenen biegeelastischen Lenkern (47, 48) beziehungsweise Parallelogrammlenkern (212, 212'), deren jeder an einem Ende mit dem Lastaufnehmer (54, 230) und an einem in der Längsrichtung des Lenkers dazu entgegengesetzten anderen Ende mit einem feststehenden Teil (1, 231) der Kraftmeßvorrichtung verbunden ist, an dem feststehenden Teil (1, 231) parallel auslenkbar geführt ist, und einer zur Übertragung mindestens eines Teils der den Lastaufnehmer belastenden, zu messenden Kraft auf einen Meßwandler zur Lieferung eines der zu messenden Kraft entsprechenden Signals dienenden Vorrichtung, die mindestens einen um eine bezüglich eines sich zwischen den beiden Lenkern (47, 48) beziehungsweise Parallelogrammlenkern (212, 212') in einer zu deren Ebene parallelen Ebene erstreckenden Tragbereichs des feststehenden Teils feststehende Schwenkachse verschwenkbaren, der Kraftübertragung dienenden Hebel (75) aufweist, der an den Lastaufnehmer (54, 230) kräftemäßig angekoppelt ist, **dadurch gekennzeichnet, daß** das feststehende Teil (1) in der Form einer den Tragbereich bildenden Grundplatte (2) ausgebildet ist, die an ihren in der Längsrichtung der Lenker (47, 48) sich erstreckenden Endbereichen je eine sich quer zur Grundplatte (2) erstreckende Seitenplatte (3) aufweist, an der die Lenker (47, 48) auf der Seite ihrer dem Lastaufnehmer (54) abgewandten Enden (51') abgestützt sind.

2. Kraftmeßvorrichtung nach Anspruch 1, **dadurch gekennzeichnet, daß** die Grundplatte (2) und die daran vorgesehenen Seitenplatten (3) durch einen Abschnitt eines einstückigen H-Profils gebildet sind, in dem die Grundplatte (2) den Querbalken und die Seitenplatten (3) die senkrechten Balken der H-Form bilden.

3. Kraftmeßvorrichtung nach Anspruch 1 oder 2, **dadurch gekennzeichnet, daß** die Seitenplatten (3) zu den Ebenen der Lenker (47, 48) parallele Randflächenbereiche (53) aufweisen, auf denen die dem Lastaufnehmer (54) abgewandten Enden (51') der Lenker (47, 48) befestigt sind.

4. Kraftmeßvorrichtung nach einem der Ansprüche 1 bis 3, **dadurch gekennzeichnet, daß** mindestens eine der Seitenplatten (3) einen sich zumindest in ihrem an die Befestigungsstelle (51') eines der Lenker (47, 48) angrenzenden Bereich erstreckenden Schlitz (91) aufweist, dessen Weite quer zur Ebene der Lenker (47, 48) verstellbar ist.

5. Kraftmeßvorrichtung nach einem der Ansprüche 1 bis 4, **dadurch gekennzeichnet, daß** der Hebel (75) durch mindestens ein zwei Befestigungsenden und eine dazwischen angeordnete Biegelinie aufweisendes Biegelager (81), dessen eines Befestigungsende (80) an dem feststehenden Teil (1) und dessen anderes Befestigungsende (82) an dem Hebel (75) festgelegt ist und dessen Biegelinie die Schwenkachse bildet, an dem feststehenden Teil (1) angelenkt ist.

6. Kraftmeßvorrichtung nach Anspruch 5, **dadurch gekennzeichnet, daß** die beiden Seitenplatten (3) des feststehenden Teils (1) je einen in einer quer zur Längsrichtung der Lenker (47, 48) gerichteten Ebene sich erstreckenden stirnseitigen Befestigungsbereich (79) aufweisen, an deren jedem je ein Befestigungsende (80) eines der Biegelager (81) festgelegt ist und der Hebel (75) einen sich zwischen den zu den an den Seitenplatten (3) befestigten Befestigungsenden (80) entgegengesetzten Befestigungsenden (82) der Biegelager (81) erstreckenden und daran befestigten Anlenkbereich (76) aufweist.

7. Kraftmeßvorrichtung nach Anspruch 6, **dadurch gekennzeichnet, daß** der Anlenkbereich (76) in bezug auf eine längs der Lenker (47, 48) von deren am Lastaufnehmer (54) festgelegten Ende zu deren am feststehenden Teil (1) festgelegten Ende hin gerichtete Blickrichtung vor dem Lastaufnehmer (54) angeordnet ist.

8. Kraftmeßvorrichtung nach Anspruch 6, **dadurch gekennzeichnet, daß** der Anlenkbereich (76) in bezug auf eine längs der Lenker (47, 48) von deren am Lastaufnehmer (54) festgelegten Ende (51") zu deren am feststehenden Teil (1) festgelegten Ende (51') hin gerichtete Blickrichtung hinter dem Lastaufnehmer (54) angeordnet ist.

9. Kraftmeßvorrichtung nach einem der Ansprüche 1 bis 4, **dadurch gekennzeichnet, daß** die zur Übertragung der zu messenden Kraft dienende Vorrichtung einen einstückigen Materialblock (4) aufweist, in dem von den Materialblock (4) quer zu der durch die Längsrichtung der Lenker (47, 48) und die Auslenkrichtung des Lastaufnehmers (54) bestimmten Parallelogrammebene durchsetzenden Ausnehmungen (15, 20, 22, 23, 26) ein an der Grundplatte (2) des feststehenden Teils festgelegter Materialbereich (33) und ein damit über einen als Biegestelle (21) geformten, die Schwenkachse bildenden Materialbereich zusammenhängender, den Hebel (30) bildender Materialbereich begrenzt sind.

10. Kraftmeßvorrichtung nach Anspruch 9, **dadurch gekennzeichnet, daß** in dem Materialblock (4) von einer ihn quer zur Parallelogrammebene durchsetzenden Ausnehmung (15) ein an seinem einen Ende mit dem kräftemäßig an den Lastaufnehmer (54) angekoppelten Arm des Hebels (30) zusammenhängender und an seinem dazu entgegengesetzten Ende mit dem Lastaufnehmer (54) verbundener, als Koppelglied (29) dienender Materialbereich begrenzt ist.

11. Kraftmeßvorrichtung nach Anspruch 9 oder 10, **dadurch gekennzeichnet, daß** in dem Materialblock (4) von einer ihn quer zur Parallelogrammebene durchsetzenden Ausnehmung (22, 23, 26) mindestens ein einen dem Hebel (30) nachgeschalteten weiteren Hebel (32) bildender Materialbereich sowie ein an seinem einen Ende mit einem Arm des weiteren Hebels (32) und an seinem dazu entgegengesetzten anderen Ende mit dem dem Lastaufnehmer (54) abgewandten Arm des vorgeschalteten Hebels (30) zusammenhängender, als weiteres Koppelglied (31) dienender Materialbereich begrenzt ist.

12. Kraftmeßvorrichtung nach einem der Ansprüche 9 bis 11, **dadurch gekennzeichnet, daß** zumindest ein Teil der Ausnehmungen nur durch eine den Materialblock (4) durchtrennende dünne Schnittlinie (15, 20, 22, 23, 26) gebildet ist.

13. Kraftmeßvorrichtung nach einem der Ansprüche 9 bis 12, **dadurch gekennzeichnet, daß** der an der Grundplatte (2) festgelegte Materialbereich (33) eine mit einem Oberflächenbereich der Grundplatte (2) formschlüssig in Eingriff stehende Anlagefläche (9) aufweist und durch mindestens einen sich parallel zur Parallelogrammebene erstreckenden Schraubbolzen (45) an der Grundplatte (2) festgespannt ist.

14. Kraftmeßvorrichtung nach einem der Ansprüche 9 bis 12, **dadurch gekennzeichnet, daß** der an der Grundplatte (2) festgelegte Materialbereich (33) eine mit einem Oberflächenbereich der Grundplatte (2) formschlüssig in Eingriff stehende Anlagefläche (9) aufweist und durch mindestens einen sich quer zur Parallelogrammebene erstreckenden Schraubbolzen (36) an mindestens einem mit der Grundplatte (2) verbundenen sowie dazu senkrecht abstehenden Befestigungsteil (34) befestigt ist.

15. Kraftmeßvorrichtung nach einem der Ansprüche 9 bis 12, **dadurch gekennzeichnet, daß** der an der Grundplatte (2) festgelegte Materialbereich eine mit einem zu einem der Lenker weisenden Oberflächenbereich der Grundplatte (2) sowie einem daran angrenzenden, sich quer zur Ebene der Lenker erstreckenden stirnseitigen Oberflächenbereich der Grundplatte (2) formschlüssig in Eingriff stehende Anlagefläche (9, 13) aufweist und durch mindestens einen den stirnseitigen Oberflächenbereich (41) durchsetzenden Schraubbolzen (42) an der Grundplatte (2) festgespannt ist.

16. Kraftmeßvorrichtung nach einem der Ansprüche 10 bis 15, **dadurch gekennzeichnet, daß** der Materialblock (4) in der Parallelogrammebene gesehen L-förmig sowie das den Hebel (30) mit dem Lastaufnehmer (54) verbindende Koppelglied (29) in dem sich parallel zum Lastaufnehmer (54) erstreckenden einen L-Schenkel (6) und der Hebel (30) in dem sich parallel zur Ebene der Grundplatte (2) erstreckenden anderen L-Schenkel (5) ausgebildet ist.

17. Kraftmeßvorrichtung nach einem der Ansprüche 1 bis 16, **dadurch gekennzeichnet, daß** der Meßwandler (63) an der Grundplatte (2) festgelegt ist.

18. Kraftmeßvorrichtung nach einem der Ansprüche 1 bis 17, **dadurch gekennzeichnet, daß** ein an einem Oberflächenbereich (97) der Grundplatte (2) festgelegter Träger (98) einen sich quer zur Grundplatte (2) erstreckenden Schaft (102) aufweist, der mit Spiel durch eine in dem dem Oberflächenbereich zugewandten Lenker (48) vorgesehene Öffnung (104) hindurchgeführt ist.

19. Kraftmeßvorrichtung nach Anspruch 1, **dadurch gekennzeichnet, daß** der Lastaufnehmer (230), die Parallelogrammlenker (212, 212') und das feststehende Teil (331) einstückig zusammenhängend in einem querschnittlich rechteckigen Hohlprofilstück (200) ausgebildet sind, in dem die beiden Seitenplatten durch Bereiche zweier zueinander paralleler Seitenwände (204, 205) des Hohlprofilstücks (200) gebildet sind, zwischen denen sich die Grundplatte (234) zwischen zwei dazu beabstandeten, zur Grundplatte (234) parallelen und die beiden Seitenwände (204, 205) verbindenden Querwänden (206, 207) erstreckt, daß in dem Hohlprofil (200) in der Längsrichtung der Parallelogrammlenker (212, 212') sich erstreckende, die Parallelogrammlenker (212, 212') begrenzende durchgehende Längsschlitze (208, 209, 208') ausgebildet sind, zwischen deren einander quer zur Längsrichtung in den Ebenen der Lenker (212, 212') jeweils paarweise gegenüberliegenden Enden in dem Hohlprofilstück (200) Dünnstellen (219, 219', 220, 220') ausgebildet sind, welche elastische Biegestellen an den Enden der Parallelogrammlenker bilden (212, 212'), und daß in dem Hohlprofilstück (200) sich quer zur Längsrichtung erstreckende Querschlitze (227, 227', 228, 228', 229) ausgebildet sind, die den Lastaufnehmer (230) gegen das feststehende Teil (231) begrenzen.

20. Kraftmeßvorrichtung nach Anspruch 19, **dadurch gekennzeichnet, daß** die die Parallelogrammlenker (212) begrenzenden Längsschlitze (208, 209) in den Querwänden (206, 207) des Hohlprofils (200) ausgebildet sind.

21. Kraftmeßvorrichtung nach Anspruch 19, **dadurch gekennzeichnet, daß** die die Parallelogrammlenker (212') begrenzenden Längsschlitze (208') in den Seitenwänden (204, 205) ausgebildet sind.

22. Kraftmeßvorrichtung nach einem der Ansprüche 19 bis 21, **dadurch gekennzeichnet, daß** die Dünnstellen (219, 219', 220, 220') jeweils zwischen zwei an jedem Lenkerende einander quer zur Ebene des jeweiligen Lenkers (212, 212') gegenüberliegenden Ausnehmungen (215, 215', 216, 216', 217, 217', 218, 218') des Hohlprofilstücks (200) begrenzt sind, die in ihrem zur Ebene der Lenker (212, 212') senkrechten Querschnitt gegeneinander konvex gewölbt sind und sich in dem Hohlprofilstück (200) parallel zur Ebene der Lenker (212, 212') sowie quer zu deren Längsachse erstrecken.

23. Kraftmeßvorrichtung nach einem der Ansprüche 19 bis 22, **dadurch gekennzeichnet, daß** die Parallelogrammlenker (212, 212') im Bereich der Dünnstellen (219, 219', 220, 220') mit das Hohlprofil (200) quer zur Ebene der Parallelogrammlenker (212, 212') durchsetzenden Durchbrechungen (221, 222) versehen sind.

24. Kraftmeßvorrichtung nach einem der Ansprüche 19 bis 23, **dadurch gekennzeichnet, daß** die beiden Seitenwände (204, 205) im Bereich des feststehenden Teils (231) in der lasteinwirkungsbedingten Auslenkrichtung des Lastaufnehmers (230) über die mit ihrer Außenfläche (232) in die Auslenkrichtung weisende Querwand (206) hinaus verlängert sind.

## Claims

1. A force measuring apparatus, particularly a weighing cell, with a load receiving means (54, 230) for receiving the force to be measured, with two guide members (47, 48) or parallelogram guide members (212, 212') that extend in two parallel planes and are rigid in the direction of these planes, but elastically bendable in the direction transverse to said planes, wherein each of these parallelogram guide members is connected to the load receiving means (54, 230) on one end and to a stationary part (1, 231) of the force measuring apparatus on the opposite end referred to the longitudinal direction of the guide member, and wherein said parallelogram guide members guide the load receiving means on the stationary part (1, 231) such that it is able to carry out a parallel excursion, and with means for transmitting at least part of the force to be measured that acts upon the load receiving means to a measuring transducer that delivers a signal corresponding to the force to be measured, wherein said force transmitting means comprises at least one force transmitting lever (75) pivotable about a pivoting axis that is stationary referred to a supporting region of the stationary part that extends between the two guide members (47, 48) or parallelogram guide members (212, 212') in a plane lying parallel to their plane, and wherein said lever is functionally coupled to the load receiving means (54, 230), **characterized in that** the stationary part (1) is realized in the form of a base plate (2) that forms the supporting region and comprises a side plate (3) extending transverse to the base plate (2) on each of the end regions of the base plate (2) that extend in the longitudinal direction of the guide members (47, 48), wherein the guide members (47, 48) are supported on the respective side plates (3) on the side of their ends (51') that faces away from the load receiving means (54).

2. The force measuring apparatus according to Claim 1, **characterized in that** the base plate (2) and the side plates (3) provided thereon are formed by a section of a one-piece H-profile, in which the base plate (2) forms the cross bar and the side plates (3) form the vertical bars of the H.

3. The force measuring apparatus according to Claim 1 or 2, **characterized in that** the side plates (3) contain edge surface areas (53) that lie parallel to the planes of the guide members (47, 48), wherein the ends (51') of the guide members (47, 48) that point away from the load receiving means (54) are fixed on said edge surface areas.

4. The force measuring apparatus according to one of Claims 1 to 3, **characterized in that** at least one of the side plates (3) contains a slot (91) that extends at least in the region of the side plate that is situated adjacent to the mounting point (51') of one guide member (47, 48), wherein the width of said slot is adjustable transverse to the plane of the guide members (47, 48).

5. The force measuring apparatus according to one of Claims 1 to 4, **characterized in that** the lever (75) is coupled to the stationary part (1) by means of at least one flection bearing (81) with two mounting ends and an elastic line arranged there between, wherein one mounting end (80) of said flection bearing is fixed on the stationary part (1) and its other mounting end (82) is fixed on the lever (75), and wherein the elastic line of the flection bearing forms the pivoting axis.

6. The force measuring apparatus according to Claim 5, **characterized in that** the two side plates (3) of the stationary part (1) respectively contain a front mounting region (79) that lies in a plane extending transverse to the longitudinal direction of the guide members (47, 48), wherein one respective mounting end (80) of a flection bearing (81) is fixed on each mounting region, and wherein the lever (75) contains a coupling region (76) that extends between and is fixed on the mounting ends (82) of the flection bearings (81) that lie opposite of the mounting ends (80) fixed on the side plates (3).

7. The force measuring apparatus according to Claim 6, **characterized in that** the coupling region (76) is arranged in front of the load receiving means (54) referred to a viewing direction that extends along the guide members (47, 48) and is directed from their end that is fixed on the load receiving means (54) to their end that is fixed on the stationary part (1).

8. The force measuring apparatus according to Claim 6, **characterized in that** the coupling region (76) is arranged behind the load receiving means (54) referred to a viewing direction that extends along the guide members (47, 48) and is directed from their end (51") that is fixed on the load receiving means (54) to their end (51') that is fixed on the stationary part (1).

9. The force measuring apparatus according to one of Claims 1 to 4, **characterized in that** the device for transmitting the force to be measured comprises a one-piece material block (4) and that recesses (15, 20, 22, 23, 26) extend through the material block (4) transverse to the parallelogram plane defined by the longitudinal direction of the guide members (47, 48) and by the direction of excursion of the load receiving means (54), wherein the aforementioned recesses limit a material region (33) fixed on the base plate (2) of the stationary part and a material region that forms the lever (30) and is connected to the former material region by means of a material region in the form of a bending point (21) that forms the pivoting axis.

10. The force measuring apparatus according to Claim 9, **characterized in that** a material region that serves as a coupling element (29) is limited in the material block (4) by a recess (15) that extends through the material region transverse to the parallelogram plane, wherein said material region is connected to the arm of the lever (30) that is functionally coupled to the load receiving means (54) with one end and to the load receiving means (54) with its opposite end.

11. The force measuring apparatus according to Claim 9 or 10, **characterized in that** at least one material region that forms an additional lever (32) arranged downstream of the lever (30) as well as a material region in the form of an additional coupling element (31) that is connected to an arm of the additional lever (32) with one end and to the arm of the upstream lever (30) that faces away from the load receiving means (54) with its opposite end are limited in the material block (4) by recesses (22, 23, 26) that extend through the material block transverse to the parallelogram plane.

12. The force measuring apparatus according to one of Claims 9 to 11, **characterized in that** at least parts of the recesses are formed by a thin cutting line (15, 20, 22, 23, 26) that cuts through the material block (4).

13. The force measuring apparatus according to one of Claims 9 to 12, **characterized in that** the material region (33) defined on the base plate (2) contains a contact surface (9) that is positively engaged with a surface region of the base plate (2) and mounted on the base plate (2) by means of at least one screw-type bolt (45) extending parallel to the parallelogram plane.

14. The force measuring apparatus according to one of Claims 9 to 12, **characterized in that** the material region (33) defined on the base plate (2) contains a contact surface (9) that is positively engaged with a surface region of the base plate (2) and fixed on at least one mounting part (34) that protrudes from and is connected to the base plate (2) by means of a screw-type bolt (36) extending transverse to the parallelogram plane.

15. The force measuring apparatus according to one of Claims 9 to 12, **characterized in that** the material region defined on the base plate (2) contains a contact surface (9, 13) that is positively engaged with a surface region of the base plate (2) that points to one of the guide members as well as an adjacent front surface region of the base plate (2) extending transverse to the plane of the guide members, and **in that** said contact surface is fixed on the base plate (2) by means of at least one screw-type bolt (42) extending through the front surface region (41).

16. The force measuring apparatus according to one of Claims 10 to 15, **characterized in that** the material block (4) has the shape of a L viewed in the parallelogram plane, wherein the coupling element (29) for connecting the lever (30) to the load receiving means (54) is realized in the L-limb (6) extending parallel to the load receiving means (54), and wherein the lever (30) is realized in the other L-limb (5) that extends parallel to the plane of the base plate (2).

17. The force measuring apparatus according to one of Claims 1 to 16, **characterized in that** the measuring transducer (63) is fixed on the base plate (2).

18. The force measuring apparatus according to one of Claims 1 to 17, **characterized in that** a carrier (98) fixed on a surface region (97) of the base plate (2) contains a cantilever (102) that extends transverse to the base plate (2) and is accommodated with a certain clearance in an opening (104) provided in the guide member (48) facing the surface region.

19. The force measuring apparatus according to Claim 1, **characterized in that** the load receiving means (230), the parallelogram guide members (212, 212') and the stationary part (331) are coherently realized in one piece in a hollow profile section (200) of rectangular cross section, in which the two side plates are formed by regions of two parallel side walls (204, 205) of the hollow profile section (200), wherein the base plate (234) extends between said parallel side walls in a region situated between the two transverse walls (206, 207) that are spaced apart from and lie parallel to the base plate (234) and the two side walls (204, 205), **in that** continuous longitudinal slots (208, 209, 208') that extend in the longitudinal direction of the parallelogram guide members (212, 212') and limit the parallelogram guide members (212, 212') are realized in the hollow profile (200), wherein thin sections (219, 219', 220, 220') are formed in the hollow profile (200) between the ends of the aforementioned longitudinal slots that are respectively situated opposite of one another in pairs transverse to the longitudinal direction, namely in the planes of the guide members (212, 212'), and wherein said thin sections form elastic bending points on the ends of the parallelogram guide members (212, 212'), and **in that** transverse slots (227, 227', 228, 228', 229) extending transverse to the longitudinal direction are realized in the hollow profile section (200) and separate the load receiving means (230) from the stationary part (231).

20. The force measuring apparatus according to Claim 19, **characterized in that** the longitudinal slots (208, 209) limiting the parallelogram guide members (212) are realized in the transverse walls (206, 207) of the hollow profile (200).

21. The force measuring apparatus according to Claim 19, **characterized in that** the longitudinal slots (208') limiting the parallelogram guide members (212') are realized in the side walls (204, 205).

22. The force measuring apparatus according to one of Claims 19 to 21, **characterized in that** the thin sections (219, 219', 220, 220') are respectively defined between two recesses (215, 215', 216, 216', 217, 217', 218, 218') of the hollow profile section (200) that lie opposite of one another transverse to the plane of the respective guide member (212, 212'), wherein the cross sections of said recesses perpendicular to the plane of the guide members (212, 212') are mutually curved in a convex fashion and extend parallel to the plane of the guide members (212, 212'), as well as transverse to the longitudinal axis of said guide members, in the hollow profile section (200).

23. The force measuring apparatus according to one of Claims 19 to 22, **characterized in that** the parallelogram guide members (212, 212') are provided with openings (221, 222) that extend through the hollow profile (200) transverse to the plane of the parallelogram guide members (212, 212') in the region of the thin sections (219, 219', 220, 220').

24. The force measuring apparatus according to one of Claims 19 to 23, **characterized in that** the two side walls (204, 205) are extended in the direction of excursion of the load receiving means (230) within the region of the stationary part (231), namely beyond the transverse wall (206) that points in the direction of excursion with its outer surface (232).

## Revendications

1. Dispositif de mesure de force, en particulier cellule de pesée, comprenant un récepteur de charge (54, 230) servant à recevoir la force à mesurer, qui est guidé sur la partie (1, 231) fixe de façon à pouvoir dévier parallèlement par deux bielles (47, 48) ou bielles de parallélogramme (212, 212') s'étendant dans deux plans parallèles entre eux, rigides dans la direction de ces plans et élastiques en flexion transversalement à la direction de ces plans, bielles dont chacune est reliée par une extrémité au récepteur de charge (54, 230) et par une autre extrémité, opposée à ce récepteur dans la direction longitudinale de la bielle, à une partie (1, 231) fixe du dispositif de mesure de force, un dispositif servant à la transmission d'au moins une partie de la force à mesurer et sollicitant le récepteur de force à un convertisseur de mesure pour la fourniture d'un signal correspondant à la force à mesurer, qui présente au moins un levier (75) servant à la transmission et pouvant pivoter autour d'un axe de pivotement fixe par rapport à une zone de support, s'étendant entre les deux bielles (47, 48) ou bielles de parallélogramme (212, 212') dans un plan parallèle à leur plan, de la partie fixe, lequel levier est couplé au niveau des forces au récepteur de charge (54, 230), **caractérisé en ce que** la partie (1) fixe est réalisée sous la forme d'une plaque de base (2) formant la zone de support, qui présente sur chacune de ses zones d'extrémité s'étendant dans le sens longitudinal des bielles (47, 48) une plaque latérale (3) s'étendant transversalement à la plaque de base (2), sur laquelle sont appuyées les bielles (47, 48) sur le côté de leurs extrémités (51') opposées au récepteur de charge (54).

2. Dispositif de mesure de force selon la revendication 1, **caractérisé en ce que** la plaque de base (2) et les plaques latérales (3) prévues dessus sont formées par une partie d'un profilé en H d'une seule pièce, dans lequel la plaque de base (2) forme la poutre transversale et les plaques latérales (3) les poutres verticales la forme en H.

3. Dispositif de mesure de force selon la revendication 1 ou 2, **caractérisé en ce que** les plaques latérales (3) présentent des zones de surfaces de bordure (53) parallèles aux plans des bielles (47, 48), sur lesquelles sont fixées les extrémités (51', opposées au récepteur de charge (54), des bielles (47, 48).

4. Dispositif de mesure de force selon l'une des revendications 1 à 3, **caractérisé en ce qu'**au moins l'une des plaques latérales (3) présente une fente (91) s'étendant au moins dans leur zone contiguë au point de fixation (51') de l'une des bielles (47, 48), fente dont la largeur peut être réglée transversalement au plan des bielles (47, 48).

5. Dispositif de mesure de force selon l'une des revendications 1 à 4, **caractérisé en ce que** le levier (75) est articulé sur la partie (1) fixe par au moins un palier de flexion (81) présentant deux extrémités de fixation et une ligne de flexion disposée entre les deux, dont une extrémité de fixation (80) est fixée sur la partie (1) fixe et dont l'autre extrémité de fixation (82) est fixée sur le levier (75) et dont la ligne de flexion forme l'axe de pivotement.

6. Dispositif de mesure de force selon la revendication 5, **caractérisé en ce que** les deux plaques latérales (3) de la partie (1) fixe présentent chacune une zone de fixation (79) côté avant s'étendant dans un plan orienté transversalement à la direction longitudinale des bielles (47, 48), zones sur chacune desquelles est fixée une extrémité de fixation (80) de l'un des paliers de flexion (81) et le levier (75) présente une zone d'articulation (76) s'étendant entre les extrémités de fixation (82), opposée aux extrémités de fixation (80) fixées sur les plaques latérales (3), des paliers de flexion (81) et fixée dessus.

7. Dispositif de mesure de force selon la revendication 6, **caractérisé en ce que** la zone d'articulation (76) est disposée avant le récepteur de charge (54) par rapport à un sens du regard dirigé le long des bielles (47, 48) depuis leur extrémité fixée sur le récepteur de charge (54) vers leur extrémité fixée sur la partie (1) fixe.

8. Dispositif de mesure de force selon la revendication 6, **caractérisé en ce que** la zone d'articulation (76) est disposée derrière le récepteur de charge (54) par rapport à une direction du regard orientée le long des bielles (47, 48) depuis leur extrémité (51") fixée sur le récepteur de charge (54) vers leur extrémité (51') fixée sur la partie fixe (1).

9. Dispositif de mesure de force selon l'une des revendications 1 à 4, **caractérisé en ce que** le dispositif servant à la transmission de la force à mesurer présente un bloc de matériau (4) d'une seule pièce, dans lequel une zone de matériau (33) fixée sur la plaque de base (7) de la partie fixe et une zone de matériau formant le levier (30), donc adhérant à cette zone au moyen d'une zone de matériau formée comme point de flexion (21) et formant l'axe de basculement, sont délimitées par des évidements (15, 20, 22, 23, 26) traversant le bloc de matériau (4) transversalement au plan du parallélogramme défini par la direction longitudinale des bielles (47,48) et la direction de déviation du récepteur de charge (54).

10. Dispositif de mesure de force selon la revendication 9, **caractérisé en ce qu'**une zone de matériau servant d'élément de couplage (29), faisant corps sur une extrémité avec le bras couplé au niveau des forces au récepteur de charge (54) du levier (30) et reliée à son extrémité opposée à la première, au récepteur de charge (54) est délimitée par un évidement qui est délimité dans le bloc de matériau (4) par un évidement (15) qui le traverse transversalement au plan du parallélogramme.

11. Dispositif de mesure de force selon la revendication 9 ou 10, **caractérisé en ce qu'**au moins une zone de matériau formant un autre levier (32) monté en aval du levier (30) et une zone de matériau servant d'autre élément de couplage (31), faisant corps par une extrémité avec un bras de l'autre levier (32) et par son autre extrémité opposée à la première, avec le bras, opposé au récepteur de charge (54), du levier (30) placé en aval sont délimitées dans le bloc de matériau (4) par un évidement (22, 23, 26) qui traverse ce bloc transversalement au plan du parallélogramme.

12. Dispositif de mesure de force selon l'une des revendications 9 à 11, **caractérisé en ce qu'**au moins une partie des évidements est formée seulement par une ligne de coupe (15, 20, 22, 23, 26) mince qui sépare le bloc de matériau (4).

13. Dispositif de mesure de force selon l'une des revendications 9 à 12, **caractérisé en ce que** la zone de matériau (33) fixée sur la plaque de base (2) présente une surface d'appui (9) en prise par complémentarité de formes avec une zone de surface de la plaque de base (2) et est tendue par au moins un boulon fileté (45) s'étendant parallèlement au plan du parallélogramme sur la plaque de base (2).

14. Dispositif de mesure de force selon l'une des revendications 9 à 12, **caractérisé en ce que** la zone de matériau (33) fixée sur la plaque de base (2) présente une surface d'appui (9) en prise par complémentarité de formes avec une zone de surface de la plaque de base (2) et est fixée par au moins un boulon fileté (36) s'étendant transversalement au plan du parallélogramme sur au moins une partie de fixation (34) reliée à la plaque de base (2) et dépassant perpendiculairement à cette plaque.

15. Dispositif de mesure de force selon l'une des revendications 9 à 12, **caractérisé en ce que** la zone de matériau fixée sur la plaque de base (2) présente une surface d'appui (9, 13) en prise par complémentarité de formes avec une zone de surface, dirigée vers l'une des bielles, de la plaque de base (2) et une zone de surface côté avant, contiguë à la première zone et s'étendant transversalement au plan des bielles, de la plaque de base (2) et est tendue sur la plaque de base (2) par au moins un boulon fileté (42) traversant la zone de surface (41) côté avant.

16. Dispositif de mesure de force selon l'une des revendications 10 à 15, **caractérisé en ce que** le bloc de matériau (4) est réalisé en forme de L vu dans le plan du parallélogramme et l'élément de couplage (29) reliant le levier (30) au récepteur de charge (54) est réalisé dans une branche en L (6) s'étendant parallèlement au récepteur de charge (54) et le levier (30) dans l'autre branche en L (5) s'étendant parallèlement au plan de la plaque de base (2).

17. Dispositif de mesure de force selon l'une des revendications 1 à 16, **caractérisé en ce que** le convertisseur de mesure (63) est fixé sur la plaque de base (2).

18. Dispositif de mesure de force selon l'une des revendications 1 à 17, **caractérisé en ce qu'**un support (98) fixé sur une zone de surface (97) de la plaque de base (2) présente une tige (102) s'étendant transversalement à la plaque de base (2), qui est guidée avec du jeu à travers une ouverture (104) prévue dans la bielle (48) tournée vers la zone de surface.

19. Dispositif de mesure de force selon la revendication 1, **caractérisé en ce que** le récepteur de charge (230), les bielles de parallélogramme (212, 212') et la partie (331) fixe sont réalisés d'un seul tenant et en adhérant dans une partie de profilé creux (200) rectangulaire en section, dans lequel les deux plaques latérales sont formées par des zones de deux parois latérales (204, 205) parallèles entre elles du bout de profilé creux (200), entre lesquelles la plaque de base (234) s'étend entre deux parois transversales (206, 207) espacées l'une de l'autre, parallèles à la plaque de base (234) et reliant les deux parois latérales (204, 205), **en ce que** des fentes longitudinales (208, 209, 208') continues, délimitant les bielles de parallélogramme (212, 212') et s'étendant dans le sens longitudinal des bielles de parallélogramme (212, 212') sont réalisées dans le profilé creux (200), fentes entre les extrémités desquelles, se faisant face respectivement par paire transversalement à la direction longitudinale dans les plans des bielles (212, 212') sont réalisés dans le bout de profilé creux (200) des endroits minces (219, 219', 220, 220'), qui forment des points de flexion élastiques sur les extrémités des bielles de parallélogramme (212, 212'), et **en ce que** dans le bout de profilé creux (200) sont réalisées des fentes transversales (227, 227', 228, 228', 229) s'étendant transversalement à la direction longitudinale, lesquelles délimitent le récepteur de charge (230) par rapport à la partie (231) fixe.

20. Dispositif de mesure de force selon la revendication 19, **caractérisé en ce que** les fentes longitudinales (208) délimitant les bielles de parallélogramme (212) sont réalisées dans des parois transversales (206, 207) du profilé creux (200).

21. Dispositif de mesure de force selon la revendication 19, **caractérisé en ce que** les fentes longitudinales (208) délimitant les bielles de parallélogramme (212') sont réalisées dans les parois latérales (204, 205).

22. Dispositif de mesure de force selon l'une des revendications 19 à 21, **caractérisé en ce que** les endroits minces (219, 219', 220, 220') sont délimités respectivement entre deux évidements (215, 215', 216, 216', 217, 217', 218, 218'), se faisant face sur chaque extrémité de bielle transversalement au plan de la bielle (212, 212') respective, du bout de profilé creux (200), lesquels évidements sont incurvés de façon convexe les uns par rapport aux autres dans leur section perpendiculaire au plan des bielles (212, 212') et s'étendent dans le bout de profilé creux (200) parallèlement au plan des bielles (212, 212') et transversalement à leur axe longitudinal.

23. Dispositif de mesure de force selon l'une des revendications 19 à 22, **caractérisé en ce que** les bielles de parallélogramme (212, 212') sont dotées dans la zone des endroits minces (219, 219', 220, 220') de percements (221, 222) traversant le profilé creux (200) transversalement au plan des bielles de parallélogramme (212, 212').

24. Dispositif de mesure de force selon l'une des revendications 19 à 23, **caractérisé en ce que** les deux parois latérales (204, 205) sont prolongées dans la zone de la partie (231) fixe dans la direction de déviation, due à l'effet de la charge, du récepteur de charge (230) au-delà de la paroi transversale (206) dirigée avec sa surface extérieure (232) dans la direction de déviation.
